# EUROPEAN PATENT APPLICATION

(11) **EP 4 830 952 A2**
(43) Date of publication of application: **28.10.2026**
(21) Application number: 26171017.2
(22) Date of filing: 07.04.2026
(51) Int. Cl.: B60H 1/00

(54) **ELECTRIC WORK MACHINE TEMPERATURE MANAGEMENT SYSTEM AND METHOD**

(30) Priority: 03.04.2025 US 202563783007 P
(71) Applicant: Manitou Equipment America, LLC, West Bend, WI 53095 (US)
(72) Inventor: Hammond, Andrew, West Bend, 53095 (US); Larscheidt, Nate, West Bend, 53095 (US); Di Castri, Vincent, West Bend, 53095 (US); Kolloju, Kashi, West Bend, 53095 (US)
(74) Representative: Loyer & Abello

(57) **Abstract**

An electric work vehicle includes a cooling subsystem (132). The cooling subsystem includes a radiator to cool temperature conditioning fluid and an expansion tank fluidly coupled to the radiator. The electric work vehicle further includes a heater configured to heat temperature conditioning fluid, a battery subsystem including a battery assembly in fluid communication with the heater and the radiator, and a heating, ventilation, and air conditioning (HVAC 130) subsystem including a heat exchanger. The heat exchanger is disposed in a cab of the vehicle and is in fluid communication with the heater. The electric work vehicle further includes a pump configured to circulate the temperature conditioning fluid through the heater, the battery assembly, the heat exchanger, and the radiator, and a plurality of valves in fluid communication with the heater, the battery assembly, the heat exchanger, the radiator, and the pump.

## Description

### CROSS REFERENCE TO RELATED APPLICATION

This application claims priority to U.S. Provisional Patent Application No. 63/783,007, filed April 3, 2025, the entire disclosure of which is incorporated by reference herein.

### BACKGROUND

Work vehicles often include temperature sensitive components (e.g., engines, motors, batteries, electrical equipment, operator cabs, etc.). Consequently, these components often require heating and/or cooling relative to ambient conditions to stay within their respective acceptable operating temperature ranges. Traditional heating and cooling systems are often inadequate, inefficient, and/or overly complicated.

### SUMMARY

In some embodiments, an electric work vehicle includes a cooling subsystem. The cooling subsystem includes a radiator to cool temperature conditioning fluid and an expansion tank fluidly coupled to the radiator. The electric work vehicle further includes a heater configured to heat temperature conditioning fluid, a battery subsystem including a battery assembly in fluid communication with the heater and the radiator, and a heating, ventilation, and air conditioning (HVAC) subsystem including a heat exchanger. The heat exchanger is disposed in a cab of the vehicle and is in fluid communication with the heater. The electric work vehicle further includes a pump configured to circulate the temperature conditioning fluid through the heater, the battery assembly, the heat exchanger, and the radiator, and a plurality of valves in fluid communication with the heater, the battery assembly, the heat exchanger, the radiator, and the pump. The plurality of valves is configurable to selectively permit circulation of the temperature conditioning fluid through the battery assembly and the heat exchanger to selectively heat and cool the battery assembly and the cab.

In some embodiments, an electric work vehicle further includes a traction subsystem and a work group and charger subsystem. The traction subsystem includes at least one first inverter, at least one first motor, and a traction pump configured to circulate the temperature conditioning fluid through the at least one first inverter and the at least one first motor. The work group and charger subsystem includes at least one second inverter, at least one second motor, a direct current to direct current (DC/DC) converter, a battery charger, and a work group pump configured to circulate the temperature conditioning fluid through the at least one second inverter, the at least one second motor, the DC/DC converter, and the battery charger.

In some embodiments, an electric work vehicle is provided wherein the battery subsystem, the HVAC subsystem, the traction subsystem, and the work group and charger subsystem are in fluid communication with the radiator of the cooling subsystem.

In some embodiments, an electric work vehicle is provided wherein the expansion tank is a first expansion tank. The battery subsystem and the HVAC subsystem are in fluid communication with the first expansion tank, and the traction subsystem and the work group and charger subsystem are in fluid communication with a second expansion tank.

In some embodiments, an electric work vehicle is provided wherein the HVAC subsystem further includes an evaporator, an expansion valve, and a compressor in fluid communication with a condenser. The evaporator is disposed in the cab and is configured to cool the cab.

In some embodiments, an electric work vehicle is provided wherein the HVAC subsystem further includes a first expansion valve and a first evaporator, and the battery subsystem includes a second expansion valve and a second evaporator. The first expansion valve, the first evaporator, the second expansion valve, and the second evaporator are in fluid communication with at least one compressor and at least one condenser. The first evaporator is configured to cool the cab and the second evaporator is configured to cool a coolant chiller that cools the temperature conditioning fluid.

In some embodiments, an electric work vehicle is provided wherein a first valve of the plurality of valves is configured to allow recirculation of temperature conditioning fluid through the heater via the pump when a temperature sensor of the battery assembly determines that the battery assembly is below a heating temperature threshold.

In some embodiments, an electric work vehicle is provided wherein a second valve of the plurality of valves is configured to direct temperature conditioning fluid to the radiator when a temperature sensor of the battery assembly determines that the battery assembly is above a cooling temperature threshold.

In some embodiments, an electric work vehicle is provided wherein one or more temperature sensors are respectively associated with the battery assembly and the cab, and a controller actuates one or more of the plurality of valves based on temperature conditioning demand data received from the one or more temperature sensors.

In some embodiments, an electric work vehicle is provided wherein the controller prioritizes heating the battery assembly, via heated temperature conditioning fluid, over heating the cab, via heated temperature conditioning fluid, when the temperature conditioning demand data indicates that the battery assembly is below a battery temperature threshold and the cab is below a cab temperature threshold.

In some embodiments, a method for managing component temperatures in an electric work vehicle includes receiving component temperature data from one or more temperature sensors respectively associated with one or more components. The one or more components include one or more of an inverter, a motor, a battery assembly, a battery charger, a DC/DC converter, and a cab of the electric work vehicle. The method further includes circulating temperature conditioning fluid via one or more pumps, actuating one or more of a plurality of valves to selectively allow the circulating temperature conditioning fluid to flow through the one or more components based on the component temperature data, and selectively activating one or more of a heater, a compressor of an air conditioner, a first fan associated with a radiator, and a second fan associated with a heat exchanger based on the component temperature data.

In some embodiments, a method further includes circulating cooled temperature conditioning fluid, cooled by the radiator, to the battery assembly and activating the compressor of the air conditioner when the component temperature data indicates that both the battery assembly and the cab require cooling.

In some embodiments, a method further includes circulating heated temperature conditioning fluid, heated by the heater, to the battery assembly and the cab when the component temperature data indicates that the battery assembly and the cab both require heating.

In some embodiments, a method further includes circulating heated temperature conditioning fluid, heated by the heater, to the battery assembly and activating the compressor of the air conditioner when the component temperature data indicates that the battery assembly requires heating while the cab requires cooling.

In some embodiments, an electric work vehicle includes a cab, a battery subsystem, and an HVAC subsystem. The battery subsystem includes a battery assembly, a first expansion valve, a first evaporator, and a coolant chiller configured to cool temperature conditioning fluid flowing to the battery assembly. The HVAC subsystem includes a second expansion valve and a second evaporator. The first expansion valve, the first evaporator, the second expansion valve, and the second evaporator are in fluid communication with at least one compressor and at least one condenser. The first evaporator is configured to cool the coolant chiller and the second evaporator is configured to cool the cab.

In some embodiments, an electric work vehicle further includes one or more temperature sensors respectively associated with the battery subsystem and the HVAC subsystem, a first solenoid valve to selectively allow refrigerant to flow through the first evaporator, a second solenoid valve to selectively allow refrigerant to flow through the second evaporator, and a controller in communication with the one or more temperature sensors. The controller is configured to actuate the first solenoid valve and the second solenoid valve. When component temperature data from the one or more temperature sensors indicates that both the battery assembly and the cab require cooling, the controller activates the at least one compressor, opens the first solenoid valve, and opens the second solenoid valve.

In some embodiments, an electric work vehicle further includes a heater configured to heat temperature conditioning fluid, a pump configured to circulate the temperature conditioning fluid, one or more temperature sensors respectively associated with the battery subsystem and the HVAC subsystem, a first solenoid valve to selectively allow refrigerant to flow through the first evaporator, a second solenoid valve to selectively allow refrigerant to flow through the second evaporator, and a controller in communication with the heater, the pump, and the one or more temperature sensors. The controller is configured to actuate the first solenoid valve and the second solenoid valve. When component temperature data from the one or more temperature sensors indicates that the battery assembly requires heating while the cab requires cooling, the controller activates the at least one compressor, closes the first solenoid valve, opens the second solenoid valve, activates the pump, and activates the heater.

In some embodiments, an electric work vehicle further includes a cooling subsystem for cooling temperature conditioning fluid. The cooling subsystem includes a radiator and an expansion tank. The electric work vehicle further includes a traction subsystem and a work group and charger subsystem. The traction subsystem includes a first inverter and a first motor and is in fluid communication with the cooling subsystem. The work group and charger subsystem includes a second inverter, a second motor, a battery charger, and a DC/DC converter and is in fluid communication with the cooling subsystem. The electric work vehicle further includes one or more temperature sensors respectively associated with one or more of the cooling subsystem, the traction subsystem, and the work group and charger subsystem. Temperature conditioning fluid is circulated to one or more of the traction subsystem and the work group and charger subsystem based on temperature conditioning demand data received from the one or more temperature sensors.

In some embodiments, an electric work vehicle further includes a first proportional valve configured to distribute temperature conditioning fluid to the battery assembly and the HVAC subsystem based on temperature conditioning demand data received from the one or more temperature sensors associated with the battery subsystem and the HVAC subsystem.

In some embodiments, an electric work vehicle is provided wherein the DC/DC converter is fluidly in parallel with the second inverter, and a fixed orifice is upstream of and delivers temperature conditioning fluid to the DC/DC converter.

In some embodiments, an electric utility vehicle including a traction system, a work group system, a battery charger, a battery for vehicle power, a heating, ventilation, and air conditioning (HVAC) system, and a temperature management system is provided. The traction system can include one or more inverters and motors used to drive the ground engaging means of the vehicle. For example, the traction system can include a right side traction system with a right inverter and a right motor for driving the right side ground engaging mechanism (such as a set of wheels) and a left side traction system with a left inverter and a left motor for driving the left side ground engaging mechanism. The work group system can include an inverter, a motor, and a direct current to direct current (DC/DC) converter for driving a work group of the vehicle such as the lift/tilt functions of a utility attachment. The HVAC system can include a refrigeration system with a condenser and evaporator. In some forms, the HVAC system also includes a cab heater core, radiator, or other heat exchanger.

The temperature management system is designed to selectively circulate temperature conditioning fluid adjacent to or within certain vehicle components based on temperature readings from temperature sensors at or near the vehicle components. The temperature management system can be configured as multiple hoses, valves, and pumps configured to selectively circulate a temperature conditioning fluid, such as water ethylene glycol, adjacent to various electric utility vehicle components to control the temperature of those components. More specifically, the temperature management system includes three temperature conditioning loops for the circulation of the temperature conditioning fluid: a traction system loop, a work group system and battery charger loop, and a battery and HVAC loop. The temperature management system has a radiator that cools the temperature conditioning fluid as it is circulated back from the respective loops.

The traction system loop includes a dedicated traction drive pump that selectively circulates temperature conditioning fluid adjacent to or within the inverters and/or motors of the traction system for cooling. In some forms, a three-way fitting is used to split the flow of temperature conditioning fluid to provide a substantially equal flow of temperature conditioning fluid to each of the right side traction system and the left side traction system in parallel.

The work group system and battery charger loop includes a dedicated work group pump that circulates temperature conditioning fluid to one or both of a battery charger flow path adjacent to the battery charger and a work group flow path adjacent to the inverter, motor, and/or DC/DC converter of the work group system. A proportional work group valve is actuated based on the relative temperature of the battery charger and the work group inverter, motor, and DC/DC converter and their respective temperature thresholds. Accordingly, the work group valve selectively determines the proportion of flow delivered to the battery charger flow path and the work group flow path based on which flow path needs cooling and which flow path needs cooling the most between them.

The battery and HVAC loop includes a dedicated battery pump that circulates temperature conditioning fluid to a battery subsystem and an HVAC subsystem that work together to cool or heat the battery and the vehicle cab. The battery and HVAC loop includes a battery return valve that is selectively actuated based on whether temperature conditioning fluid should be returned to the radiator for cooling or recirculated within the battery and HVAC loop for heating.

When the temperature sensors determine that the battery needs heating and the operator is not requesting heat through the HVAC system, temperature conditioning fluid is circulated along a battery heating flow path. Along the battery heating flow path, temperature conditioning fluid is pumped through a heater to heat the fluid and to a battery/HVAC valve, which directs the fluid to the battery. Next, the fluid flows through a battery cooler valve, which directs the fluid to an HVAC bypass valve. Because the operator is not requesting HVAC heat in this scenario, the HVAC bypass valve bypasses the cab heater and directs fluid back to the battery return valve, which directs the fluid back along the battery heating flow path until the battery is sufficiently heated.

When the temperature sensors determine that the battery needs heating and the operator is requesting heat through the HVAC system, temperature conditioning fluid is circulated along a battery/HVAC heating flow path. Along the battery/HVAC heating flow path, temperature conditioning fluid is pumped through the heater to heat the fluid and to the battery/HVAC valve, which is a proportional valve that directs fluid flow to the battery and the cab heater. The battery/HVAC valve will prioritize heating of the battery, while also directing some of the heated fluid to the HVAC bypass valve, which directs the heated fluid to the cab heater. The fluid directed to the battery will heat the battery and then be directed to the HVAC bypass valve by the battery cooler valve. After flowing through the cab heater, fluid is recirculated by the battery return valve along the battery/HVAC flow path until the battery is sufficiently heated and the operator stops requesting heat through the HVAC.

When the battery does not need heating, but the operator is requesting heat through the HVAC system, temperature conditioning fluid is circulated along an HVAC heating flow path. Along the HVAC heating flow path, temperature conditioning fluid is pumped through the heater to heat the fluid and to the battery/HVAC valve, which will direct fluid flow to the HVAC bypass valve and then to the cab heater. After flowing through the cab heater, fluid is recirculated by the battery return valve along the HVAC heating flow path until the operator stops requesting heat through the HVAC. It is understood that the HVAC heating demand can be higher than the battery heating demand. Thus, when the battery does not need heating, but the operator is requesting heat through the HVAC, the heater can be set to a higher temperature than when the battery is receiving heated temperature conditioning fluid.

When the temperature sensors determine that the battery needs cooling, temperature conditioning fluid is pumped by the battery pump along a battery cooling flow path. The battery cooling flow path includes the heater (which is turned off or bypassed), the battery/HVAC valve, the battery, and the battery cooler valve. The battery pump pumps the cooled temperature conditioning fluid from the radiator to the battery/HVAC valve which directs the fluid to the battery. After flowing through the battery, the fluid flows through the battery cooler valve and back to the radiator until the battery is sufficiently cooled.

In some instances, air is drawn via an electric fan through a rear panel of the work machine, through the condenser of the HVAC system, across the radiator, and out through a top panel of the work machine to centrally cool the temperature conditioning fluid.

A controller is in communication with temperature sensors that are positioned throughout the various system loops, and the controller controls at least the pumps, valves, and fan. The pumps are variable speed and can be controlled based on temperature conditioning demand data from the various system loops. The temperature conditioning fluid is divided between the system loops by turning the pumps on and off and/or opening and closing the valves within each system loop. In some instances, the controller additionally detects an ambient temperature of the work machine environment.

In some instances, when the work machine is moving, all temperature conditioning fluid is directed to the traction system to cool its inverter and/or motor. In some instances, when the work machine is stationary and in charging mode, all temperature conditioning fluid is directed to the charger system to cool the charger.

### BRIEF DESCRIPTION OF THE DRAWINGS

The accompanying drawings, which are incorporated in and form a part of this specification, illustrate embodiments of the disclosure and, together with the description, serve to explain the principles of embodiments of the disclosure:
FIG. 1 is a rear isometric view of a temperature management system according to an embodiment, as integrated with a traction system, a work group system, an HVAC system, a battery charger, and a battery of an electric work machine;
FIG. 2 is a front isometric view of the temperature management system of FIG. 1 as integrated with the traction system, the work group system, and the battery charger;
FIG. 3 is a schematic view of the temperature management system of FIG. 1;
FIG. 4 is a schematic view of a cooling subsystem of the temperature management system of FIG. 1;
FIG. 5 is a schematic view of a traction subsystem of the temperature management system of FIG. 1;
FIG. 6 is a schematic view of a work group and battery charger subsystem of the temperature management system of FIG. 1;
FIG. 7 is a schematic view of a battery subsystem and a heating, ventilation, and HVAC subsystem of the temperature management system of FIG. 1;
FIG. 8 is a schematic view of the battery subsystem and the HVAC subsystem of FIG. 7 in a first configuration;
FIG. 9 is a schematic view of the battery subsystem and the HVAC subsystem of FIG. 7 in a second configuration;
FIG. 10a is a schematic view of the battery subsystem and the HVAC subsystem of FIG. 7 in a third configuration;
FIG. 10b is a schematic view of the battery subsystem and the HVAC subsystem of FIG. 7 in an alternate third configuration;
FIG. 11 is a schematic view of the battery subsystem and the HVAC subsystem of FIG. 7 in a fourth configuration;
FIG. 12 is a schematic view of the battery subsystem and the HVAC subsystem of FIG. 7 in a fifth configuration;
FIG. 13 is a schematic view of the battery subsystem and the HVAC subsystem of FIG. 7 in a sixth configuration;
FIG. 14 is a schematic view of the battery subsystem and the HVAC subsystem of FIG. 7 in a seventh configuration;
FIG. 15 is a schematic view of the battery subsystem and the HVAC subsystem of FIG. 7 in an eighth configuration;
FIG. 16 is a block diagram of various interconnected electronic components of the temperature management system of FIG. 1;
FIG. 17 is a flow diagram depicting a method of managing electric work machine component temperatures using the temperature management system of FIG. 1, according to the principles of this disclosure;
FIG. 18 is a rear isometric view of a temperature management system according to another embodiment, as integrated with various systems of an electric work machine;
FIG. 19 is a schematic view of the temperature management system of FIG. 18;
FIG. 20 is a schematic view of a cooling subsystem of the temperature management system of FIG. 18;
FIG. 21 is a schematic view of a battery subsystem and an HVAC subsystem of the temperature management system of FIG. 18;
FIG. 22 is a schematic view of the battery subsystem and the HVAC subsystem of FIG. 21 in a first configuration;
FIG. 23 is a schematic view of the battery subsystem and the HVAC subsystem of FIG. 21 in a second configuration;
FIG. 24 is a schematic view of the battery subsystem and the HVAC subsystem of FIG. 21 in a third configuration;
FIG. 25 is a schematic view of the battery subsystem and the HVAC subsystem of FIG. 21 in a fourth configuration; and
FIG. 26 is a block diagram of various interconnected electronic components of the temperature management system of FIG. 18.

### DETAILED DESCRIPTION

Various modifications to the illustrated embodiments will be readily apparent to those skilled in the art, and the generic principles herein can be applied to other embodiments and applications. Thus, it is to be understood that the disclosure is not limited in its application to the details of the configuration and arrangement of components set forth in the following description or illustrated in the accompanying drawings. The disclosure is capable of being practiced or of being carried out in various ways and is to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the disclosure. Skilled artisans will recognize that the examples provided herein have many useful alternatives and fall within the scope of the disclosure.

Before any embodiments are explained in detail, it is to be understood that the disclosure is not limited in its application to the details of construction and the arrangement of components set forth in the following description or illustrated in the attached drawings. The disclosure is capable of other embodiments and of being practiced or of being carried out in various ways. Also, it is to be understood that the phraseology and terminology used herein are for the purpose of description and should not be regarded as limiting. For example, the use of "including," "comprising," or "having" and variations thereof herein is meant to encompass the items listed thereafter and equivalents thereof as well as additional items.

As used herein, unless otherwise specified or limited, the terms "mounted," "connected," "supported," and "coupled" and variations thereof are used broadly and encompass both direct and indirect mountings, connections, supports, and couplings. Further, unless otherwise specified or limited, "connected" and "coupled" are not restricted to physical or mechanical connections or couplings.

As used herein, unless otherwise specified or limited, "at least one of A, B, and C," and similar other phrases, are meant to indicate A, or B, or C, or any combination of A, B, and/or C. As such, this phrase, and similar other phrases can include single or multiple instances of A, B, and/or C, and, in the case that any of A, B, and/or C indicates a category of elements, single or multiple instances of any of the elements of the categories A, B, and/or C.

As mentioned above, current devices and methods to manage electric work vehicle component temperatures are inadequate and inefficient. Thus, it would be useful to provide more sophisticated and versatile devices and methods to heat and/or cool multiple work vehicle subsystems.

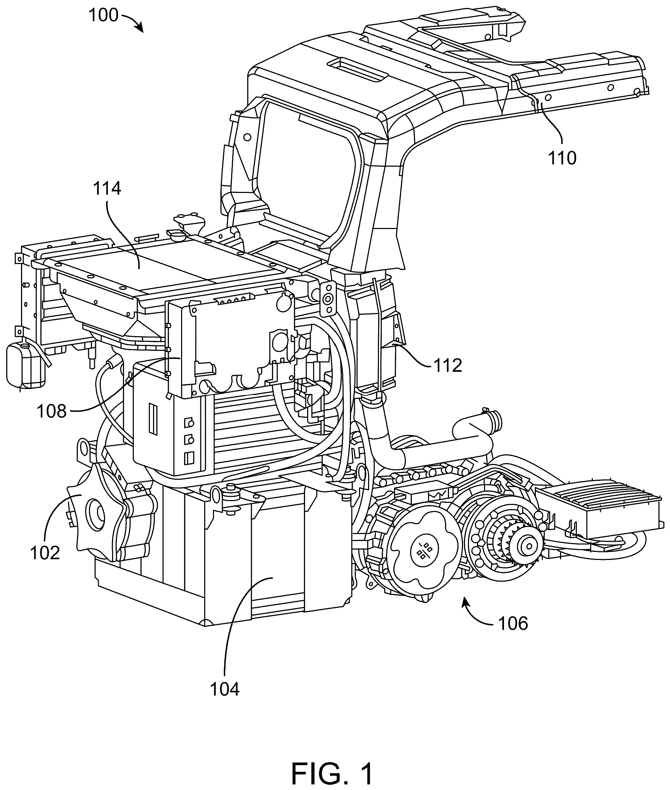

Referring generally to FIG. 1, a temperature management system 100 is illustrated as integrated with a work group system 102, a battery assembly 104, a traction system 106, a battery charger 108, a cab 110, and an HVAC system 112 of an electric work vehicle. The temperature management system 100 includes a radiator 114 to transfer heat to the ambient atmosphere.

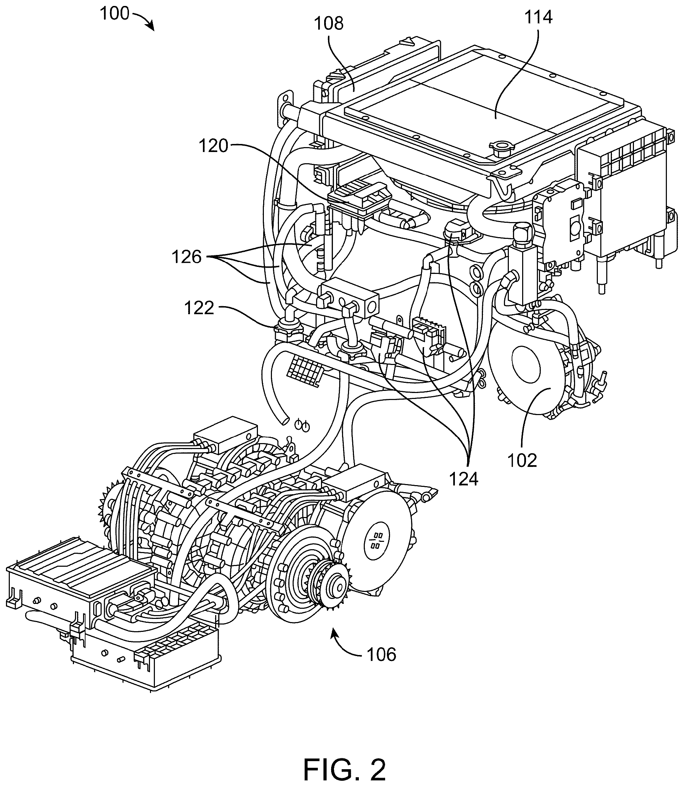

FIG. 2 also illustrates the temperature management system 100 integrated with the work group system 102, the traction system 106, and the battery charger 108. Further, FIG. 2 illustrates that the temperature management system 100 includes a heater 120, a plurality of pumps 122, and a plurality of valves 124 interconnected via a plurality of hoses 126. The plurality of hoses 126 are configured to convey a temperature conditioning fluid (e.g., coolant, water, ethylene glycol diluted in water, etc.) in order to transfer heat to and from the components of the electric work vehicle. In some forms, the plurality of hoses 126 are wrapped around and/or pass through the work group system 102, battery assembly 104 (shown in FIG. 1), the traction system 106, the battery charger 108, and the cab 110 (shown in FIG. 1). In some forms, the plurality of hoses 126 connect to a temperature conditioning fluid inlet and a temperature conditioning fluid outlet of certain components such as the work group system 102, the battery assembly 104, the traction system 106, and/or the battery charger 108. In this way, existing coolant passageways or other cooling architecture within certain components can be leveraged. Further, the plurality of pumps 122 are turned on and off and the plurality of valves 124 are opened and closed to selectively direct the temperature conditioning fluid into and through the plurality of hoses 126. Consequently, the plurality of hoses 126 aid in selectively heating and cooling the work group system 102, the battery assembly 104, the traction system 106, the battery charger 108, and the cab 110.

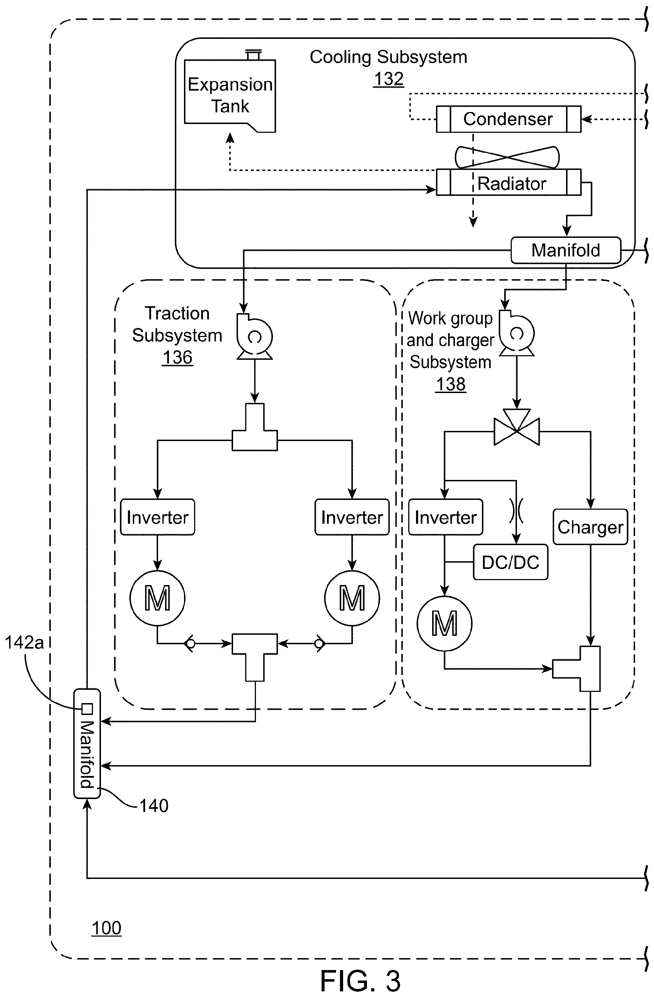

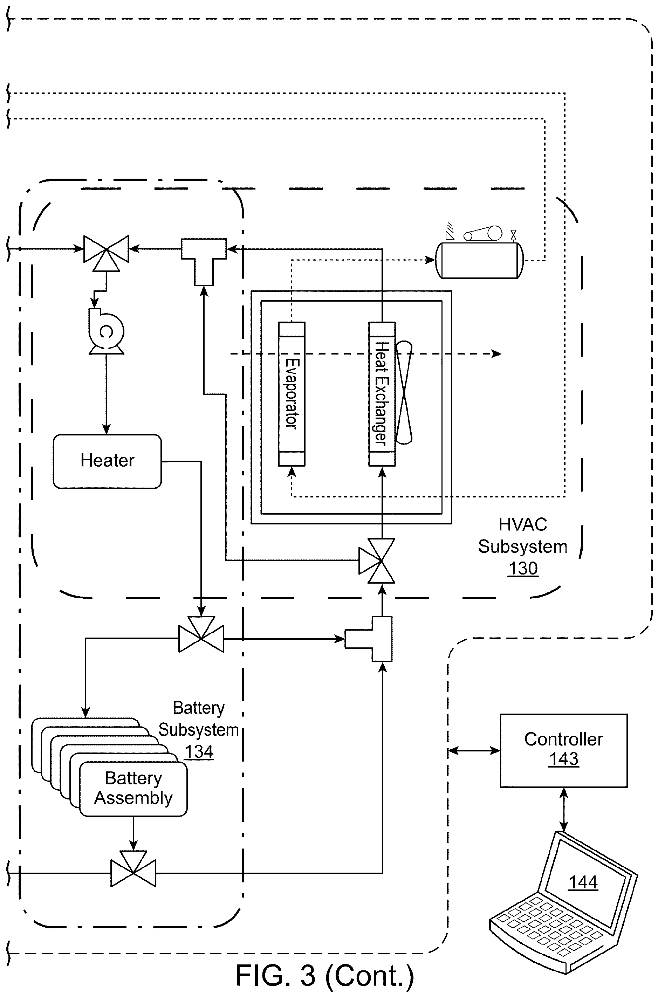

FIG. 3 illustrates a schematic view of the temperature management system 100 including an HVAC subsystem 130, a cooling subsystem 132, a battery subsystem 134, a traction subsystem 136, a work group and charger subsystem 138, and a return manifold 140 in fluid communication with one another. Temperature conditioning fluid circulates selectively through the HVAC subsystem 130, the cooling subsystem 132, the battery subsystem 134, the traction subsystem 136, and the work group and charger subsystem 138. The return manifold 140 is equipped with a temperature sensor 142a that measures a temperature of the temperature conditioning fluid flowing through the return manifold 140.

The traction subsystem 136 and the work group and charger subsystem 138 are downstream of and receive temperature conditioning fluid from the cooling subsystem 132. Further, the traction subsystem 136 and the work group and charger subsystem 138 are upstream of and deliver temperature conditioning fluid to the return manifold 140. In turn, the return manifold 140 is upstream of and returns temperature conditioning fluid to the cooling subsystem 132.

The HVAC subsystem 130 and the battery subsystem 134 are illustrated as overlapping one another because they share a subset of components, as will be explained in greater detail below. Like the traction subsystem 136 and the work group and charger subsystem 138, the HVAC subsystem 130 and the battery subsystem 134 are downstream of and receive temperature conditioning fluid from the cooling subsystem 132. However, the HVAC subsystem 130 is configured to return temperature conditioning fluid to the battery subsystem 134, not the return manifold 140. The battery subsystem 134 is upstream of and delivers temperature conditioning fluid to the return manifold 140. Also shown in FIG. 3, the temperature management system 100 is in communication with a controller 143. The controller 143 is connectable to and/or in communication with a computing device 144.

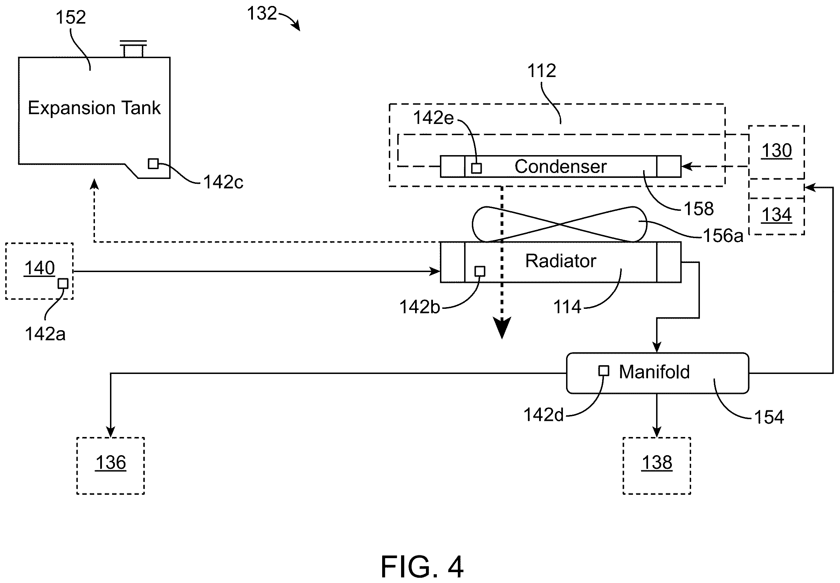

With reference to FIG. 4, the cooling subsystem 132 includes the radiator 114 in fluid communication with an expansion tank 152 and a distribution manifold 154. In some forms, the radiator 114 is connected to the expansion tank 152 through a pressure relief valve. Additionally, a first fan 156a cools the radiator 114. In some embodiments, the HVAC system 112 includes a condenser 158, and the first fan 156a is configured to draw air through the condenser 158 and blow air across the radiator 114 and out of the electric work vehicle. In some forms, the condenser 158 is not positioned near the first fan 156a and/or is not part of the cooling subsystem 132. The radiator 114 is downstream of and receives temperature conditioning fluid from the return manifold 140. Further, the radiator 114 is upstream of and delivers temperature conditioning fluid to the distribution manifold 154, which, in turn, is upstream of and delivers temperature conditioning fluid to the HVAC subsystem 130, the battery subsystem 134, the traction subsystem 136, and the work group and charger subsystem 138. In some instances, the first fan 156a and the radiator 114 are physically integrated. In use, the radiator 114 dissipates heat from the temperature conditioning fluid into the surrounding atmosphere.

Additionally, in some embodiments, a refrigerant (e.g., R32 difluoromethane, R134A, propane, etc.) circulates through the condenser 158 of the HVAC system 112 as part of an air conditioning function. Accordingly, the condenser 158 releases heat from the refrigerant into the ambient atmosphere. In some instances, the refrigerant condenses from a gaseous state into a liquid state within the condenser 158. Temperatures of the temperature conditioning fluid are measured via temperature sensors 142b-142e, which are associated with one or more of the radiator 114, the expansion tank 152, the distribution manifold 154, and the condenser 158, respectively. In some forms, the temperature sensors 142b-142e are installed inside of, outside of, or near said components.

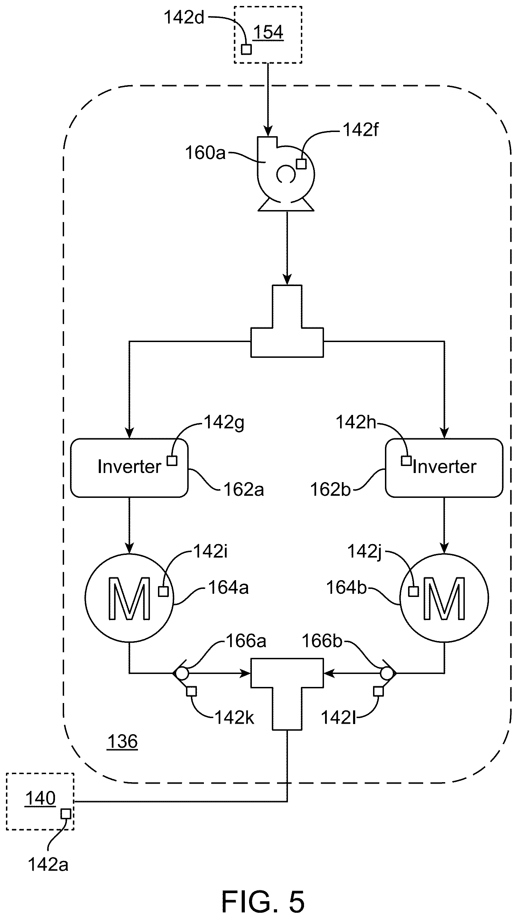

Referring to FIG. 5, the traction subsystem 136 includes a first pump 160a in fluid communication with a first inverter 162a, a second inverter 162b, a first motor 164a, a second motor 164b, a first check valve 166a, and a second check valve 166b. In some forms, the traction subsystem 136 includes only the first inverter 162a, the first motor 164a, and the first check valve 166a, and not the second inverter 162b, the second motor 164b, and the second check valve 166b. The first pump 160a is downstream of and receives temperature conditioning fluid from the distribution manifold 154. The first pump 160a is upstream of and delivers temperature conditioning fluid in parallel to the first inverter 162a and the second inverter 162b. The first motor 164a is downstream of and receives temperature conditioning fluid after the first inverter 162a (or vice versa). Similarly, the second motor 164b is downstream of and receives temperature conditioning fluid after the second inverter 162b (or vice versa). The first check valve 166a is downstream of and receives temperature conditioning fluid after the first motor 164a. Similarly, the second check valve 166b is downstream of and receives temperature conditioning fluid after the second motor 164b. The first check valve 166a and the second check valve 166b prevent temperature conditioning fluid from flowing backward toward the first motor 164a and the second motor 164b, respectively. Thus, the first inverter 162a, the first motor 164a, and the first check valve 166a are positioned along a first traction flow path, and the second inverter 162b, the second motor 164b, and the second check valve 166b are positioned along a second traction flow path that is in parallel with the first traction flow path.

When the first pump 160a is activated, heat is removed from the traction subsystem 136 by way of the temperature conditioning fluid flowing in parallel around and/or through the first inverter 162a, the second inverter 162b, the first motor 164a, and the second motor 164b via the plurality of hoses 126 (shown in FIG. 2). Temperatures of the temperature conditioning fluid can be measured via temperature sensors 142f-142l associated with one or more of the first pump 160a, the first inverter 162a, the second inverter 162b, the first motor 164a, the second motor 164b, the first check valve 166a, and the second check valve 166b, respectively. In some forms, the temperature sensors 142f-142l are installed inside of, outside of, or near said components.

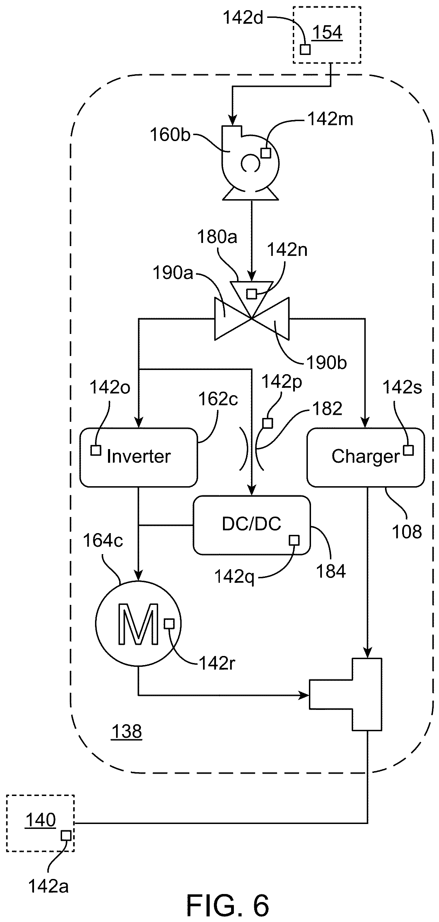

Referring to FIG. 6, the work group and charger subsystem 138 includes a second pump 160b in fluid communication with a first proportional valve 180a, a third inverter 162c, a third motor 164c, a fixed orifice 182 (restrictor), a direct current to direct current (DC/DC) converter 184, and the battery charger 108. The second pump 160b is upstream of and delivers temperature conditioning fluid to the first proportional valve 180a.

The first proportional valve 180a is upstream of and delivers temperature conditioning fluid to the third inverter 162c and the fixed orifice 182 via a first outlet 190a, which leads to a work group flow path. The fixed orifice 182 is upstream of and delivers temperature conditioning fluid to the DC/DC converter 184. The third motor 164c is downstream of and receives temperature conditioning fluid after the third inverter 162c and after the DC/DC converter 184. Thus, the fixed orifice 182 and the DC/DC converter 184 are positioned in parallel with the third inverter 162c.

Additionally, the first proportional valve 180a is upstream of and delivers temperature conditioning fluid to the battery charger 108 via a second outlet 190b, which leads to a battery charger flow path. The third motor 164c and the battery charger 108 both deliver temperature conditioning fluid to the return manifold 140. Thus, the battery charger flow path is parallel with the work group flow path.

When the second pump 160b is activated, heat is removed from the work group and charger subsystem 138 by the temperature conditioning fluid flowing in parallel around and/or through the battery charger 108, the third inverter 162c, the fixed orifice 182, the DC/DC converter 184, and the third motor 164c via the plurality of hoses 126 (shown in FIG. 2). Temperatures of the temperature conditioning fluid can be measured via temperature sensors 142m-142s associated with one or more of the second pump 160b, the first proportional valve 180a, the third inverter 162c, the fixed orifice 182, the DC/DC converter 184, the third motor 164c, and the battery charger 108, respectively. In some forms, the temperature sensors 142m-142s are installed inside of, outside of, or near said components. Further, the first proportional valve 180a adjustably and/or proportionally delivers temperature conditioning fluid out of the first outlet 190a and the second outlet 190b to the work group flow path and the battery charger flow path based on cooling demand and/or temperature data from the temperature sensors 142m-142s.

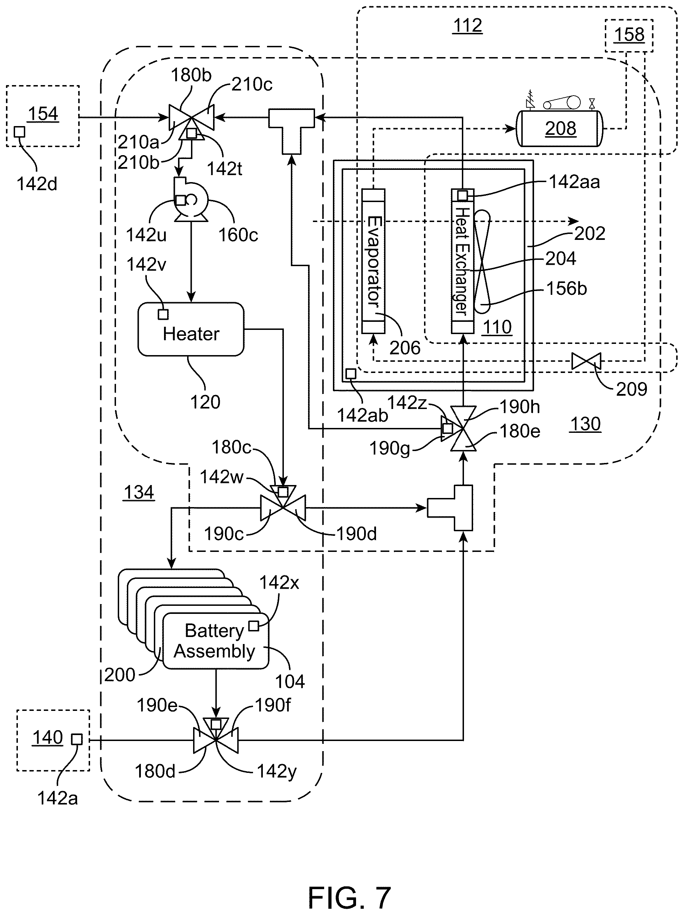

Turning to FIG. 7, the battery subsystem 134 includes a second proportional valve 180b in fluid communication with a third pump 160c, a heater 120, a third proportional valve 180c, the battery assembly 104, and a fourth proportional valve 180d. In some instances, the battery assembly 104 is formed of a plurality of batteries 200 electrically connected to one another. Additionally, the cab 110 is illustrated schematically by an enclosure 202.

The HVAC subsystem 130 includes the second proportional valve 180b in fluid communication with the third pump 160c, the heater 120, the third proportional valve 180c, a fifth proportional valve 180e, and a heat exchanger 204. Thus, the battery subsystem 134 and the HVAC subsystem 130 overlap to share the second proportional valve 180b, the third pump 160c, the heater 120, and the third proportional valve 180c. The HVAC system 112 includes an evaporator 206 in fluid communication with a compressor 208, the condenser 158 (see FIG. 4), and an expansion valve 209. A second fan 156b can be positioned to direct ambient air across the evaporator 206 and the heat exchanger 204.

The second proportional valve 180b is downstream of and receives temperature conditioning fluid from the distribution manifold 154 via a first inlet 210a and receives temperature conditioning fluid from the heat exchanger 204 or the fifth proportional valve 180e via a second inlet 210c. Additionally, the second proportional valve 180b is upstream of and delivers temperature conditioning fluid to the third pump 160c via an outlet 210b. The third pump 160c is upstream of and delivers temperature conditioning fluid to the heater 120. In turn, the heater 120 is upstream of and delivers temperature conditioning fluid to the third proportional valve 180c. The third proportional valve 180c is upstream of and delivers temperature conditioning fluid to the battery assembly 104 via a third outlet 190c and to the fifth proportional valve 180e via a fourth outlet 190d. The battery assembly 104 is upstream of and delivers temperature conditioning fluid to the fourth proportional valve 180d. Further, the fourth proportional valve 180d is upstream of and delivers temperature conditioning fluid to the return manifold 140 via a fifth outlet 190e and to the fifth proportional valve 180e via a sixth outlet 190f. Thus, because the third proportional valve 180c and the fourth proportional valve 180d are upstream of and variably deliver temperature conditioning fluid to the fifth proportional valve 180e, the HVAC subsystem 130 is subordinate to the battery subsystem 134. Additionally, the fifth proportional valve 180e is upstream of and delivers temperature conditioning fluid to the second proportional valve 180b via a seventh outlet 190g and to the heat exchanger 204 via an eighth outlet 190h.

In the HVAC subsystem 130, when the heat exchanger 204 is receiving heated temperature conditioning fluid, heat transfers from the heat exchanger 204 into the cab 110, in particular by way of the second fan 156b, thus warming the cab 110. Conversely, in the HVAC subsystem 130, when the heat exchanger 204 is receiving ambient or cooled temperature conditioning fluid, heat transfers from the cab 110 into the heat exchanger 204, thus cooling the cab 110. Additionally, when the evaporator 206 is active, heat transfers from the cab 110 into the evaporator 206, thus cooling the cab 110.

When the third pump 160c is activated, temperature conditioning fluid selectively moves through the battery subsystem 134 and/or the HVAC subsystem 130 based on the configuration of the second proportional valve 180b, the third proportional valve 180c, the fourth proportional valve 180d, and the fifth proportional valve 180e. Temperatures of the temperature conditioning fluid can be measured at different locations via temperature sensors 142t-142ab, which are associated with one or more of the second proportional valve 180b, the third pump 160c, the heater 120, the third proportional valve 180c, the battery assembly 104, the fourth proportional valve 180d, the fifth proportional valve 180e, the heat exchanger 204, and the cab 110, respectively. In some forms, the temperature sensors 142t-142ab are installed inside of, outside of, or near said components. Further, the second proportional valve 180b, the third proportional valve 180c, the fourth proportional valve 180d, and the fifth proportional valve 180e adjustably and/or proportionally deliver temperature conditioning fluid based on heating and cooling demands and/or temperature data from the temperature sensors 142t-142ab.

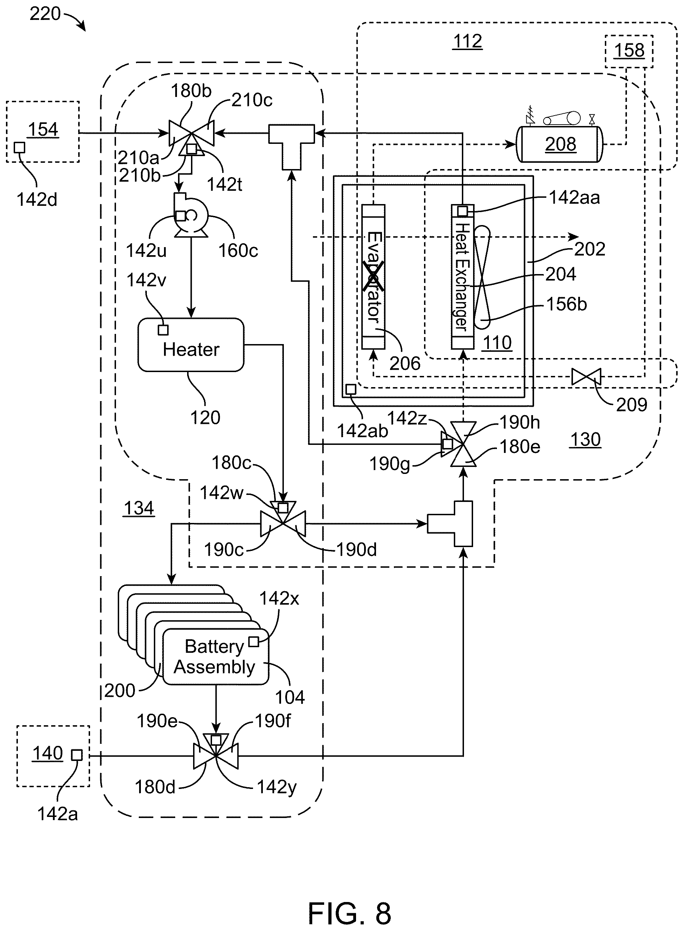

With reference to FIG. 8, in a first configuration 220, neither the battery assembly 104 nor an operator in the cab 110 demands temperature conditioning (e.g., heating or cooling). Thus, the third pump 160c is deactivated, and temperature conditioning fluid is not circulated through either the battery subsystem 134 or the HVAC subsystem 130.

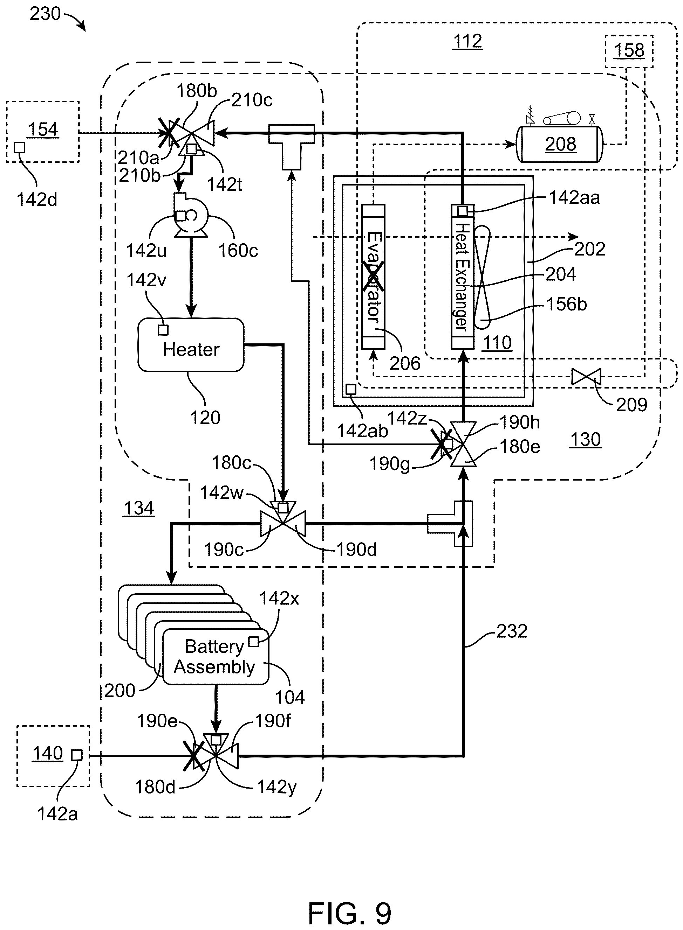

With reference to FIG. 9, a second configuration 230 is illustrated, which corresponds to both the battery assembly 104 and the operator in the cab 110 demanding heating at the same time. More specifically, in the second configuration 230, the first inlet 210a, the fifth outlet 190e, and the seventh outlet 190g are closed. Additionally, in the second configuration 230, the third pump 160c, the heater 120, and the second fan 156b are activated. Thus, temperature conditioning fluid recirculates through the battery subsystem 134 and the HVAC subsystem 130 along a first flow path 232 via the second proportional valve 180b, the third pump 160c, the heater 120, the third proportional valve 180c, the battery assembly 104, the fourth proportional valve 180d, the fifth proportional valve 180e, and the heat exchanger 204. Thus, warmed temperature conditioning fluid remains in and transfers heat to, thereby warming, the battery subsystem 134 and the HVAC subsystem 130, the HVAC subsystem 130 being warmed by way of the second fan 156b moving air through the heat exchanger 204 as the heat exchanger 204 circulates warmed temperature conditioning fluid. In some instances, the third proportional valve 180c favors heating demand from the battery assembly 104 and thus directs a larger portion of heated temperature conditioning fluid to the battery assembly 104 until the battery assembly 104 is sufficiently warmed.

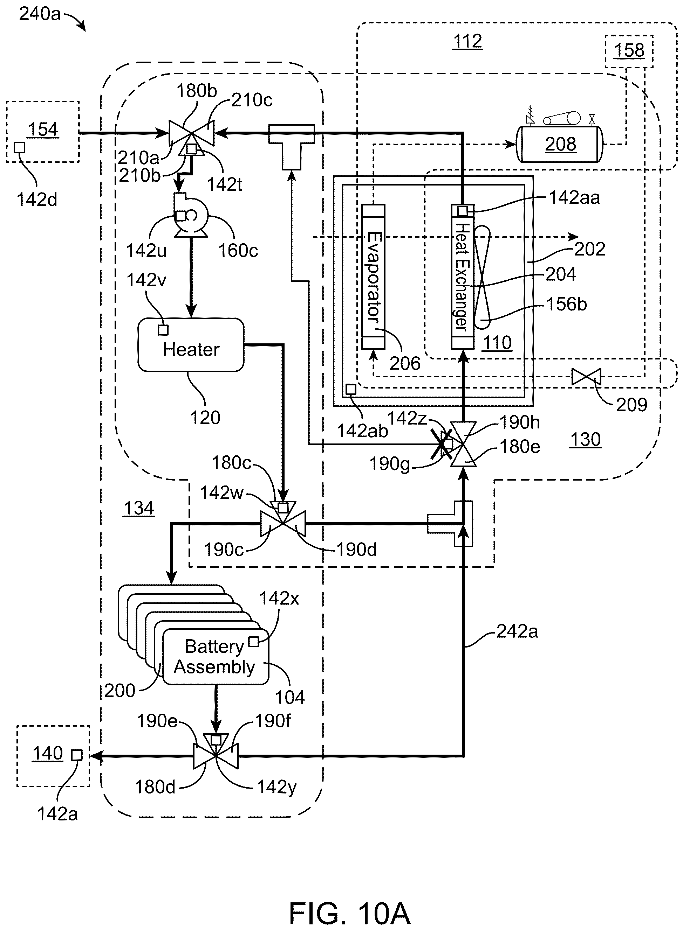

With reference to FIG. 10a, in a third configuration 240a, both the battery assembly 104 and the operator in the cab 110 are demanding cooling. More specifically, in the third configuration 240a, the seventh outlet 190g is closed. Additionally, in the third configuration 240a, the third pump 160c and the second fan 156b are activated. Thus, cooled temperature conditioning fluid from the distribution manifold 154 moves through the battery subsystem 134 and the HVAC subsystem 130 along a second flow path 242a via the second proportional valve 180b, the third pump 160c, the heater 120, the third proportional valve 180c, the battery assembly 104, the fourth proportional valve 180d, the fifth proportional valve 180e, and the heat exchanger 204. Further, temperature conditioning fluid returns to the return manifold 140 via the fifth outlet 190e. Thus, temperature conditioning fluid removes heat from, thereby cooling, the battery subsystem 134 and the HVAC subsystem 130. In some instances, the third proportional valve 180c favors cooling demand from the battery assembly 104 and thus directs a larger portion of temperature conditioning fluid to the battery assembly 104 until the battery assembly 104 is sufficiently cooled.

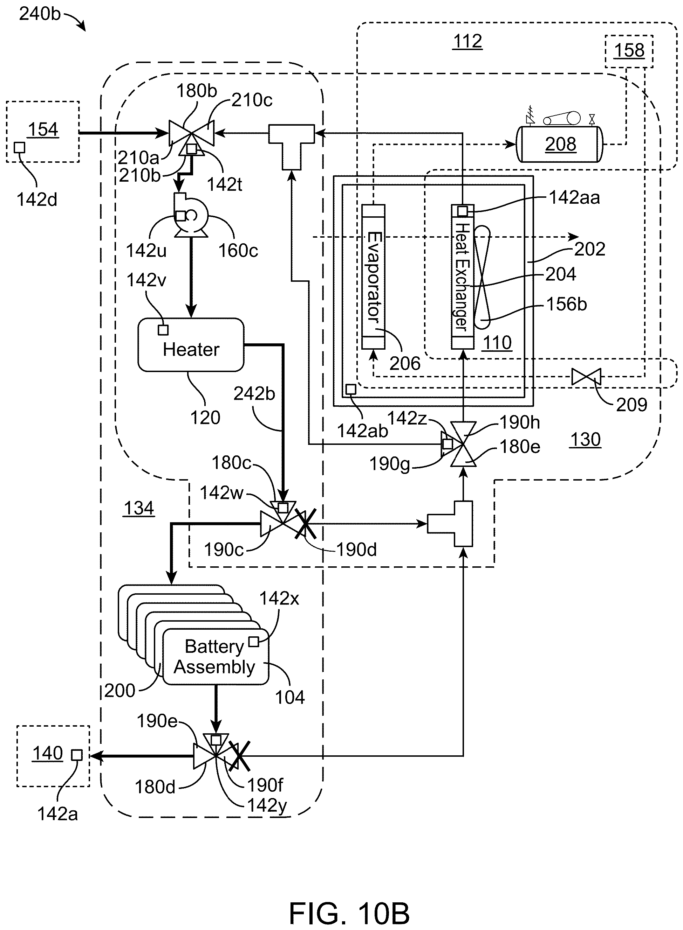

With reference to FIG. 10b, in an alternate third configuration 240b, both the battery assembly 104 and the operator in the cab 110 are demanding cooling. However, unlike the third configuration 240a, the fourth outlet 190d and the sixth outlet 190f are closed, effectively cutting off flow to the heat exchanger 204 and limiting the flow of temperature conditioning fluid to an alternate second flow path 242b. Accordingly, the cooling for the cab 110 is provided solely by the evaporator 206 of the HVAC system 112, e.g., the air conditioning function, and not via the heat exchanger 204.

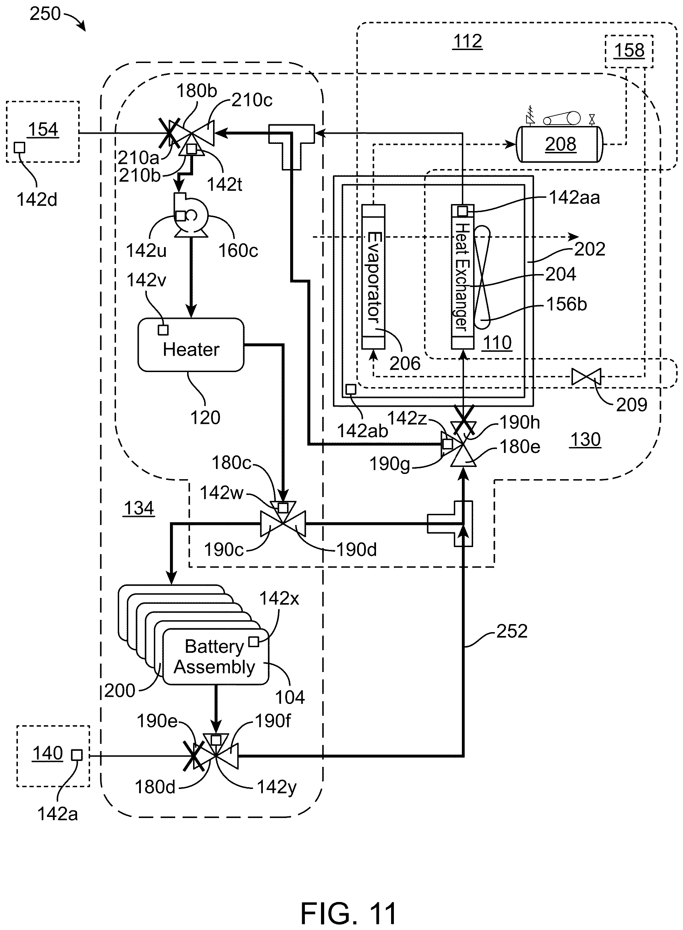

Referring to FIG. 11, in a fourth configuration 250, the battery assembly 104 demands heating while the operator in the cab 110 demands cooling. More specifically, in the fourth configuration 250, the first inlet 210a, the fifth outlet 190e, and the eighth outlet 190h are closed. Additionally, in the fourth configuration 250, the third pump 160c, the heater 120, and the air conditioning function of the HVAC system 112, e.g., the evaporator 206, the compressor 208, etc., are activated. Thus, temperature conditioning fluid recirculates through the battery subsystem 134 and elements of the HVAC subsystem 130 along a fourth flow path 252 via the second proportional valve 180b, the third pump 160c, the heater 120, the third proportional valve 180c, the battery assembly 104, the fourth proportional valve 180d, and the fifth proportional valve 180e. Further, temperature conditioning fluid bypasses the cab 110 via the seventh outlet 190g. Thus, temperature conditioning fluid transfers heat to the battery subsystem 134. In some instances, the third proportional valve 180c responds to heating demand from the battery assembly 104 by modulating proportions of temperature conditioning fluid delivered to the battery assembly 104 and bypassed via the fourth outlet 190d. Meanwhile, the evaporator 206 removes heat to cool the cab 110 in response to the operator cab cooling demand.

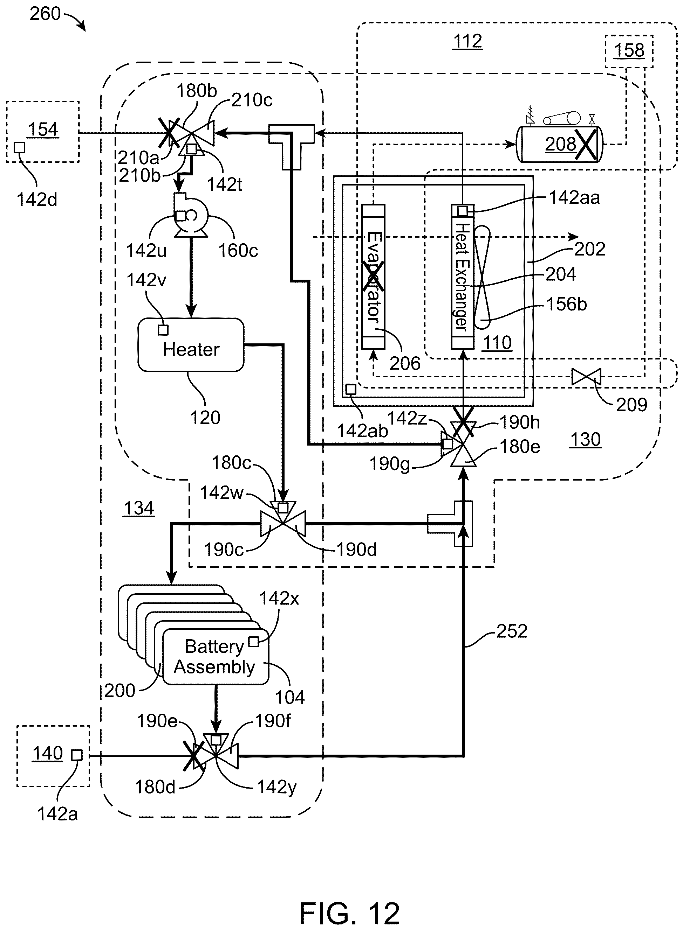

Referring to FIG. 12, in a fifth configuration 260, the battery assembly 104 demands heating while the operator in the cab 110 does not make any demand for temperature conditioning. More specifically, in the fifth configuration 260, the first inlet 210a, the fifth outlet 190e, and the eighth outlet 190h are closed. Additionally, in the fifth configuration 260, the third pump 160c and the heater 120 are activated while the air conditioning function of the HVAC system 112, e.g., the evaporator 206, the compressor 208, etc., is deactivated. Thus, temperature conditioning fluid recirculates through the battery subsystem 134 and elements of the HVAC subsystem 130 along the fourth flow path 252 in the same manner as in FIG. 11.

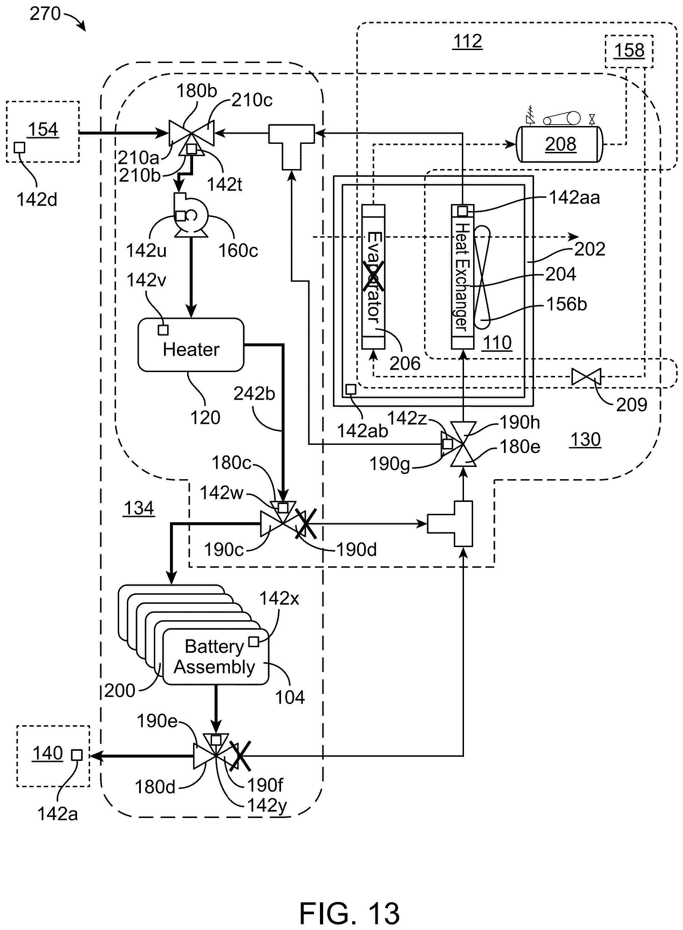

Referring to FIG. 13, in a sixth configuration 270, the battery assembly 104 demands cooling while the operator in the cab 110 does not make any demand for temperature conditioning. More specifically, in the sixth configuration 270, the fourth outlet 190d and the sixth outlet 190f are closed. Additionally, in the sixth configuration 270, the third pump 160c is activated while the heater 120 and the air conditioning function of the HVAC system 112, e.g., the evaporator 206, the compressor 208, etc., are deactivated. Thus, cooled temperature conditioning fluid from the distribution manifold 154 moves through the battery subsystem 134 and elements of the HVAC subsystem 130 along the flow path 242b, which is the same flow path as described with respect to the alternative third configuration 240b. For example, temperature conditioning fluid flows through the second proportional valve 180b, the third pump 160c, the heater 120, the third proportional valve 180c, the battery assembly 104, and the fourth proportional valve 180d. Further, temperature conditioning fluid returns to the return manifold 140 via the fifth outlet 190e. Thus, temperature conditioning fluid removes heat from, thereby cooling, the battery subsystem 134.

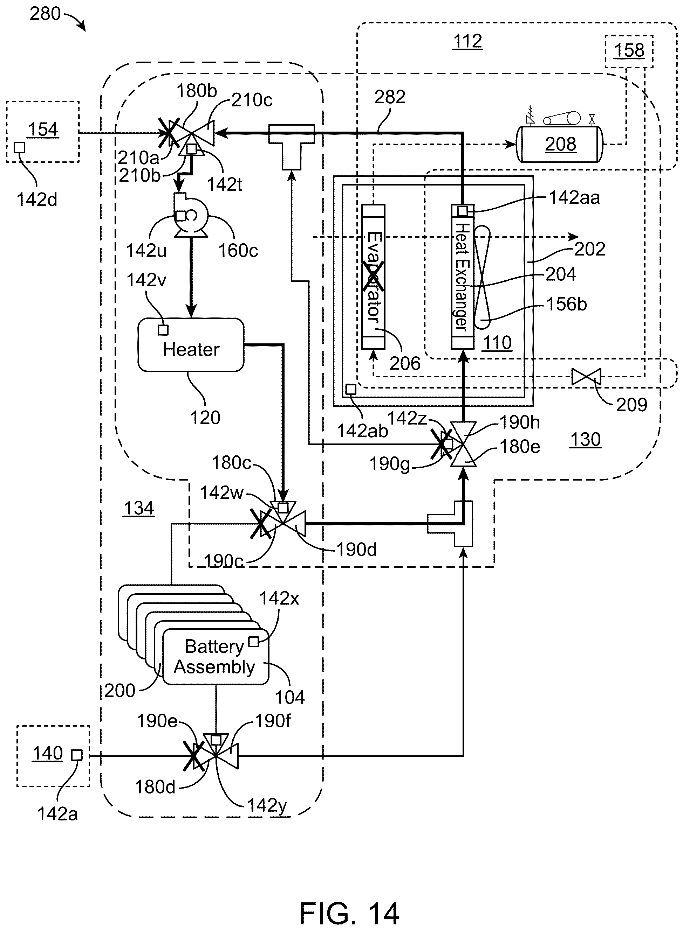

With reference to FIG. 14, in a seventh configuration 280, the battery assembly 104 does not make any demand for temperature conditioning while the operator in the cab 110 demands heating. More specifically, in the seventh configuration 280, the first inlet 210a, the third outlet 190c, the fifth outlet 190e, and the seventh outlet 190g are closed. Additionally, in the seventh configuration 280, the third pump 160c, the heater 120, and the second fan 156b are activated. Thus, temperature conditioning fluid recirculates through elements of the battery subsystem 134 and the HVAC subsystem 130 along a sixth flow path 282 via the second proportional valve 180b, the third pump 160c, the heater 120, the third proportional valve 180c, the fifth proportional valve 180e, and the heat exchanger 204. Thus, warmed temperature conditioning fluid transfers heat to, thereby warming, the cab 110. More specifically, the heat exchanger 204 adds heat to the cab 110. It is understood that the heating demand of the HVAC subsystem 130 can be higher than the heating demand of the battery subsystem 134. Thus, when the battery subsystem 134 does not need heating but the operator is requesting heat for the HVAC subsystem 130, the heater 120 can be set to a higher temperature than when the battery subsystem 134 is receiving heated temperature conditioning fluid.

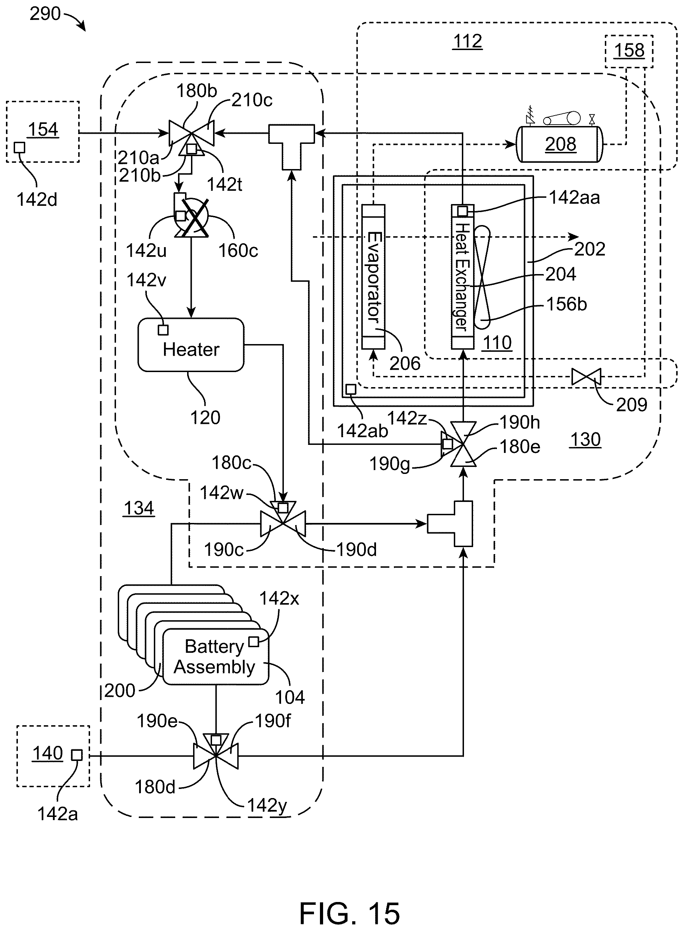

With reference to FIG. 15, in an eighth configuration 290, the battery assembly 104 does not make any demand for temperature conditioning while the operator in the cab 110 demands cooling. More specifically, in the eighth configuration 290, the third pump 160c is deactivated, and the air conditioning function of the HVAC system 112, e.g., the evaporator 206, the compressor 208, etc., is activated. Thus, no temperature conditioning fluid is circulated through either the battery subsystem 134 or the HVAC subsystem 130. Meanwhile, the evaporator 206 removes heat to cool the cab 110.

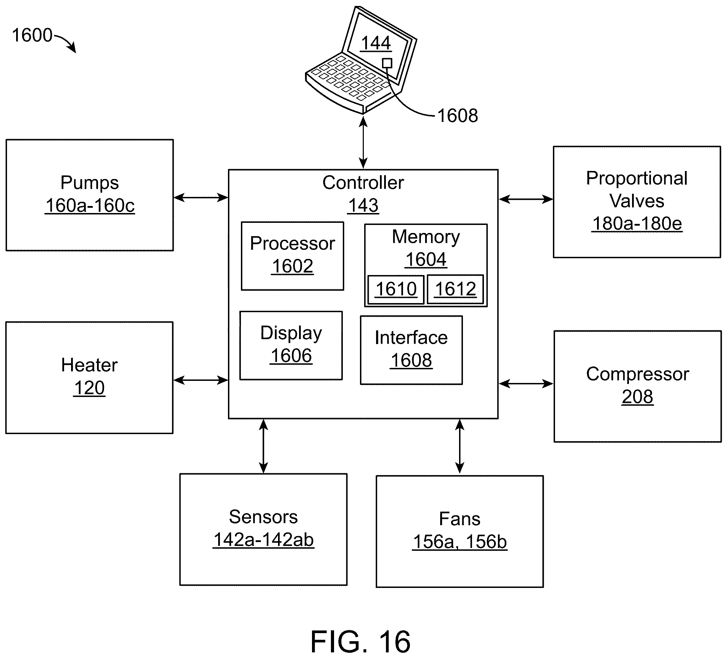

FIG. 16 illustrates various interconnected electronic components 1600 of the electric work machine with which the temperature management system 100 is integrated. The electronic components 1600 include the controller 143 in communication with the temperature sensors 142a-142ab, the computing device 144, the fans 156a, 156b, the pumps 160a-160c, the proportional valves 180a-180e, the heater 120, and the compressor 208. In some instances, the controller 143 includes a processor 1602, a memory 1604, a display 1606, and an interface 1608. In some instances, the display 1606 and the interface 1608 are combined (e.g., a touch screen display). In some instances, the interface 1608 may be additionally or alternatively presented via the computing device 144. Further, the computing device 144 is removably connectable to the controller 143 and may be used to program and/or retrieve data from the controller 143. Here, responsive to temperature data from the temperature sensors 142a-142ab, various configurations, settings, and activations of the fans 156a, 156b, the pumps 160a-160c, the proportional valves 180a-180e, the heater 120, and/or the compressor 208 may be programmed into the controller 143 via the interface 1608 and/or the computing device 144 or preprogrammed into the controller 143. Further, temperature measurements, rotational speeds (fans and pumps), flow apportionments, and activation statuses may be variously retrieved from the temperature sensors 142a-142ab, the fans 156a, 156b, the pumps 160a-160c, the proportional valves 180a-180e, the heater 120, and/or the compressor 208. Further, the activation status of the work group system 102, the traction system 106, the battery charger 108, and the HVAC system 112 can be used to apportion temperature conditioning fluid or demand more temperature conditioning fluid based on which vehicle systems are in use.

More specifically, in operation, the processor 1602 may retrieve temperature conditioning apportionment data 1610 and/or operating temperature thresholds 1612 from the memory 1604 to supply a particular subsystem and/or component with a greater proportion of temperature conditioning fluid until the temperature conditioning demand of that particular subsystem and/or component is met. For example, when the battery assembly 104 and the operator in the cab 110 both demand temperature conditioning, the processor 1602 may access the memory 1604 and use the temperature conditioning apportionment data 1610 to activate the pump 160c and actuate the proportional valves 180b-180e to satisfy the temperature conditioning demand of the battery assembly 104 before that of the user in the cab 110.

Additionally, the processor 1602 may use the operating temperature thresholds 1612 to determine whether the temperature of a component is outside a predetermined operating temperature range by comparing data from the temperature sensors 142a-142ab to specific temperature thresholds for the components of the temperature conditioning system 100. Further, the processor 1602 may use the temperature conditioning apportionment data 1610 and/or the operating temperature thresholds 1612 to control the pumps 160a-160c, the heater 120, the fans 156a, 156b, the compressor 208, and/or the proportional valves 180a-180e to preferentially supply temperature conditioning fluid to bring the component temperatures within the predetermined operating temperature range. It should be understood that any or all of the proportional valves 180a-180e can be provided in the form of any three-way valve configuration, even if not a proportional valve.

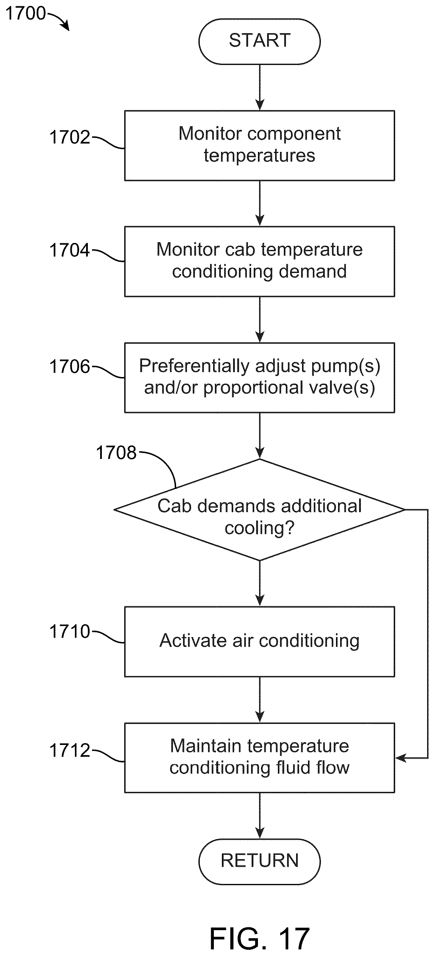

FIG. 17 illustrates a flow diagram depicting a method 1700 executable by the controller 143 of FIG. 3 to manage electric work machine component temperatures using the temperature management system 100 of FIG. 1. The method 1700 starts at step 1702, where the controller 143 monitors component temperatures. More specifically, the controller 143 collects temperature measurements of the subsystems (the HVAC subsystem 130, the cooling subsystem 132, the battery subsystem 134, the traction subsystem 136, and the work group and charger subsystem 138) via the temperature sensors 142a-142aa and determines whether component temperatures within the subsystems 130, 132, 134, 136, 138 are within the designated operating temperature thresholds 1612. In some forms, the controller 143 also considers the activation status of the work group system 102, the battery assembly 104, the traction system 106, the battery charger 108, and the HVAC system 112 at step 1702 so that the circulation of temperature conditioning fluid can be prioritized to active components (battery charger 108 active, etc.), and in some embodiments, based on the degree to which a component is active (speed of motors 164a, 164b, 164c, etc.). In some forms, temperature conditioning fluid will not be circulated to inactive components, regardless of the sensed temperature of the component. Accordingly, one or both of the activation status and the data from the temperature sensors 142a-142aa can comprise temperature conditioning demand data. The method proceeds to step 1704.

At step 1704, the controller 143 monitors a cab temperature conditioning demand. More specifically, the controller collects temperature measurements of the cab 110 via the temperature sensor 142ab and determines whether the cab temperature meets the temperature conditioning demands made by the operator using the interface 1608. The method proceeds to step 1706.

At step 1706, the controller 143 adjusts one or more of the pumps 160a-160c and/or one or more of the proportional valves 180a-180e to preferentially provide temperature conditioning fluid flow to and/or within the subsystems 130, 132, 134, 136, 138. More specifically, the controller 143 dynamically and responsively controls the pumps 160a-160c and/or proportional valves 180a-180e based on temperature measurements from the temperature sensors 142a-142ab and the temperature conditioning apportionment data 1610 to provide greater temperature conditioning capacity to the cooling subsystem 132, the battery subsystem 134, the traction subsystem 136, and the work group and charger subsystem 138 than to the HVAC subsystem 130 until component temperatures within the subsystems 132, 134, 136, 138 fall within their respective operating temperature thresholds 1612. The method proceeds to step 1708.

At step 1708, the controller 143 determines whether the operator in the cab 110 demands additional cooling. If yes, the method 1700 proceeds to step 1710. If no, the method 1700 proceeds to step 1712.

At step 1710, the controller 143 activates the air conditioning function of the HVAC system 112, e.g., the evaporator 206, the compressor 208, etc. More specifically, the controller 143 controls the compressor 208 to circulate refrigerant through the evaporator 206 and the condenser 158.

At step 1712, the controller 143 maintains the temperature conditioning fluid flow. More specifically, the controller 143 instructs the pumps 160a-160c and the proportional valves 180a-180e to circulate temperature conditioning fluid throughout the subsystems (the HVAC subsystem 130, the cooling subsystem 132, the battery subsystem 134, the traction subsystem 136, and the work group and charger subsystem 138). The method 1700 returns to step 1702.

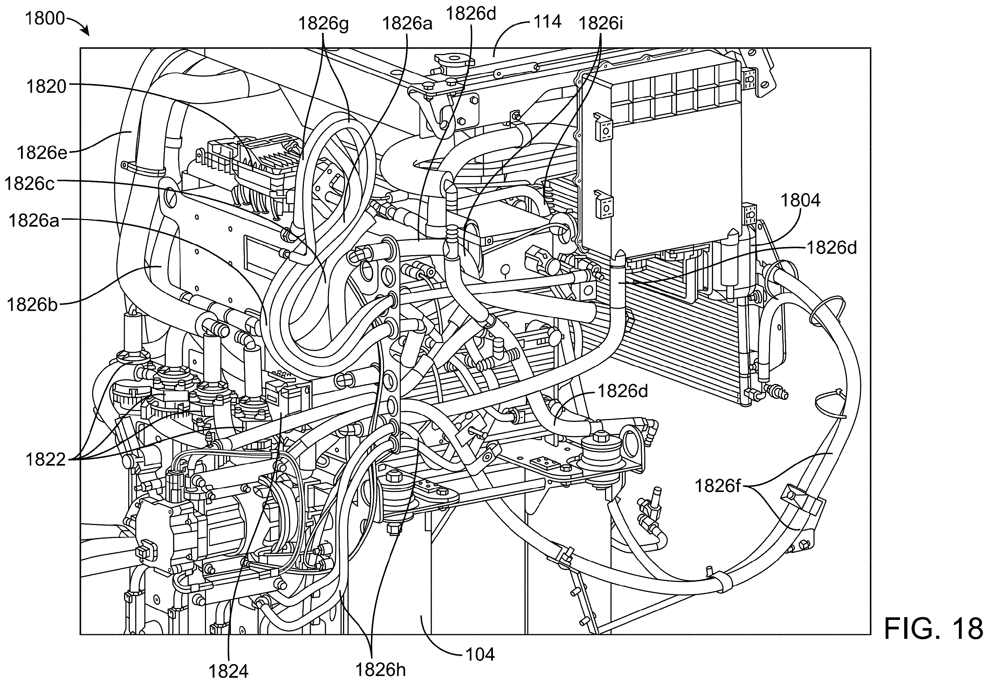

FIG. 18 illustrates an alternative temperature management system 1800, which can be integrated with several of the same electric work machine systems that the temperature management system 100 is integrated with. For example, the temperature management system 1800 is integrated with the battery assembly 104 and the cab 110. The temperature management system 1800 can also be integrated with the work group system 102, the traction system 106, and the battery charger 108 (see FIG. 1), although these configurations are not shown in FIG. 18. Further, the temperature management system 1800 is integrated with an HVAC system 1804, which is distinct from the HVAC system 112.

The temperature management system 1800 includes the radiator 114 to transfer heat to the ambient atmosphere. Further, FIG. 18 illustrates that the temperature management system 1800 includes a heater 1820, a plurality of pumps 1822, and a plurality of valves 1824 interconnected via a plurality of hoses 1826a-1826i. The plurality of hoses 1826a-1826i are configured to convey a temperature conditioning fluid (e.g., coolant, water, ethylene glycol diluted in water, refrigerant, etc.) in order to transfer heat to and from the components of the electric work vehicle. In some forms, the plurality of hoses 1826a-1826i are wrapped around and/or pass through the work group system 102, the battery assembly 104, the traction system 106, the battery charger 108, and the cab 110. In some forms, the plurality of hoses 1826a-1826i connect to a temperature conditioning fluid inlet and a temperature conditioning fluid outlet of certain components such as the work group system 102, the battery assembly 104, the traction system 106, and/or the battery charger 108. In this way, existing coolant passageways or other cooling architecture within certain components can be leveraged. Further, the plurality of pumps 1822 are turned on and off and the plurality of valves 1824 are opened and closed to selectively direct the temperature conditioning fluid into and through the plurality of hoses 1826. Consequently, the plurality of hoses 1826a-1826i aid in selectively heating and cooling the work group system 102, the battery assembly 104, the traction system 106, the battery charger 108, and the cab 110.

More specifically, the plurality of hoses 1826a-1826i includes a coolant heat loop 1826a, a heat to battery connection 1826b, a battery coolant loop 1826c, a traction system coolant loop 1826d, a hydraulic inverter-charger-DC/DC converter coolant loop 1826e, a compressor-condenser refrigerant line 1826f, a cab air conditioning line 1826g, battery tower series coolant lines 1826h, and battery chiller refrigerant lines 1826i.

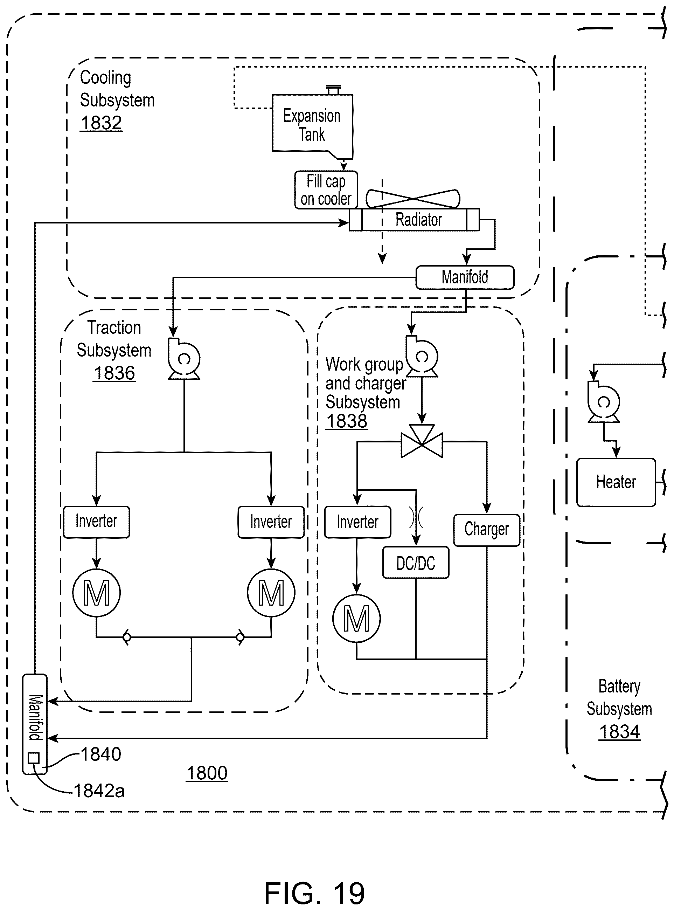

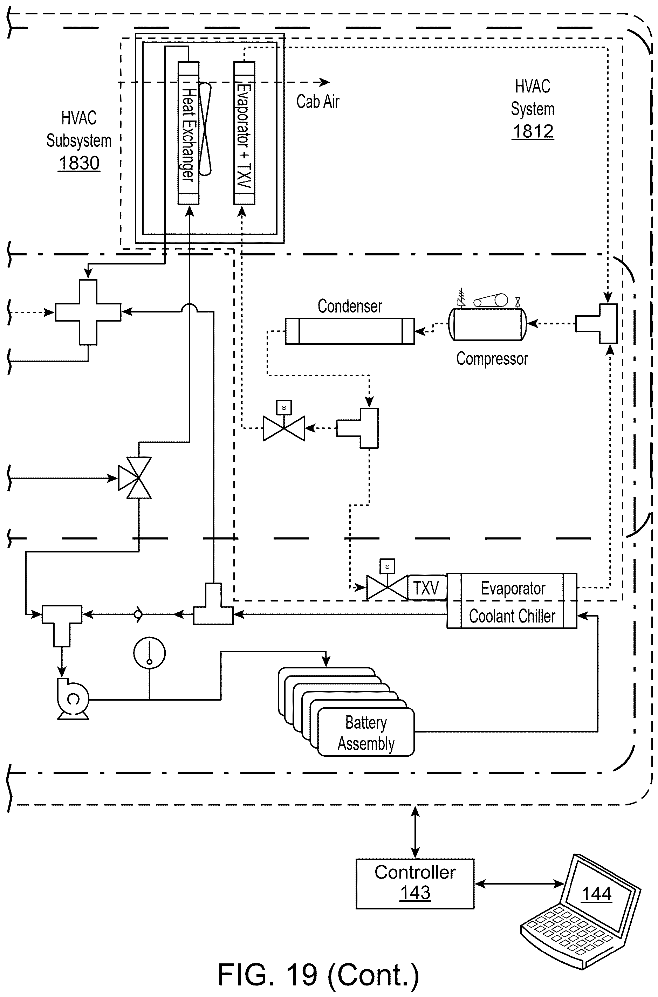

FIG. 19 illustrates a schematic view of the temperature management system 1800 including an HVAC subsystem 1830, a cooling subsystem 1832, and a battery subsystem 1834. The temperature management system 1800 can further include a traction subsystem 1836, a work group and charger subsystem 1838, and a return manifold 1840, which are in fluid communication with one another. The traction subsystem 1836 is similar to the traction subsystem 136 such that the description provided above with respect to the traction subsystem 136 is hereby incorporated by reference with respect to the traction subsystem 1836. The work group and charger subsystem 1838 is similar to the work group and charger subsystem 138 such that the description provided above with respect to the work group and charger subsystem 138 is hereby incorporated by reference with respect to the work group and charger subsystem 1838.

Temperature conditioning fluid circulates selectively through the HVAC subsystem 1830, the cooling subsystem 1832, the battery subsystem 1834, the traction subsystem 1836, and the work group and charger subsystem 1838. The return manifold 1840 can be equipped with a temperature sensor 1842a that measures a temperature of the temperature conditioning fluid flowing through the return manifold 1840. The traction subsystem 1836 and the work group and charger subsystem 1838 are downstream of and receive temperature conditioning fluid from the cooling subsystem 1832. Further, the traction subsystem 1836 and the work group and charger subsystem 1838 are upstream of and deliver temperature conditioning fluid to the return manifold 1840. In turn, the return manifold 1840 is upstream of and returns temperature conditioning fluid to the cooling subsystem 1832.

The HVAC subsystem 1830 and the battery subsystem 1834 are illustrated as overlapping one another because they share a subset of components, as will be explained in greater detail below. The HVAC subsystem 1830 and the battery subsystem 1834 can have their own supply of temperature conditioning fluid that may be selectively fluidly isolated from the cooling subsystem 1832, the traction subsystem 1836, and the work group and charger subsystem 1838, except that in some instances, they may all share expansion tank 152. However, in some other instances, the HVAC subsystem 1830 and the battery subsystem 1834 are fluidly coupled to a second, separate expansion tank. Alternatively, the cooling subsystem 1832 can be upstream of and selectively provide temperature conditioning fluid to the HVAC subsystem 1830 and the battery subsystem 1834. Also shown in FIG. 19, the temperature management system 1800 is in communication with the controller 143. The controller 143 is connectable to and/or in communication with the computing device 144.

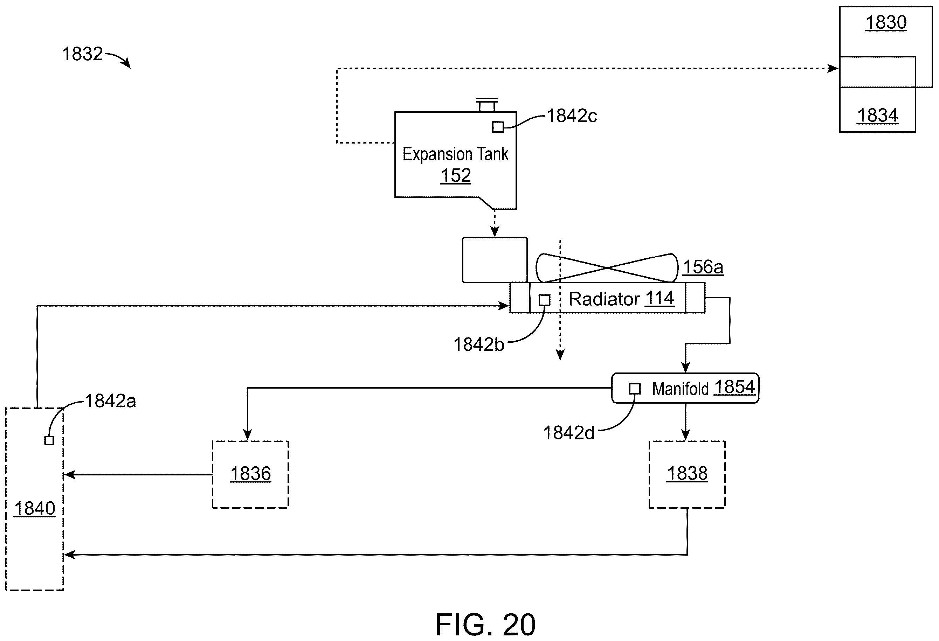

With reference to FIG. 20, the cooling subsystem 1832 includes the radiator 114 in fluid communication with the expansion tank 152 and a distribution manifold 1854. In some forms, the radiator 114 is connected to the expansion tank 152 through a pressure relief valve. Additionally, the first fan 156a is configured to blow air across the radiator 114 and out of the electric work vehicle. The radiator 114 is downstream of and receives temperature conditioning fluid from the return manifold 1840. Further, the radiator 114 is upstream of and delivers temperature conditioning fluid to the distribution manifold 1854, which, in turn, is upstream of and delivers temperature conditioning fluid to the traction subsystem 1836 and the work group and charger subsystem 1838. In some instances, the first fan 156a and the radiator 114 are physically integrated. In use, the radiator 114 dissipates heat from the temperature conditioning fluid into the surrounding atmosphere. Further, temperatures of the temperature conditioning fluid are measured via temperature sensors 1842b-1842d associated with one or more of the radiator 114, the expansion tank 152, and the distribution manifold 1854, respectively. In some forms, the temperature sensors 1842a-1842d are installed inside of, outside of, or near said components.

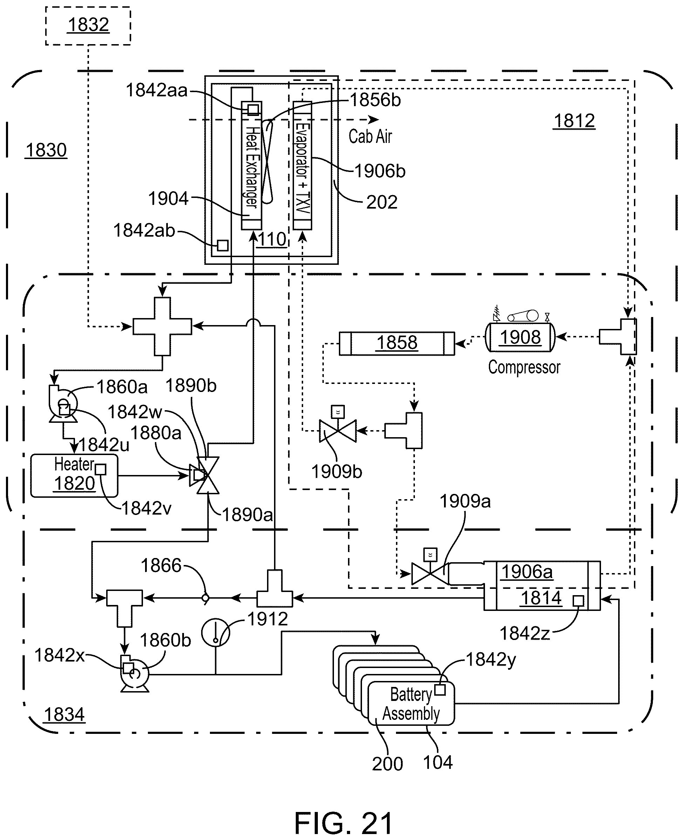

Referring to FIG. 21, the battery subsystem 1834 includes a first pump 1860a in fluid communication with the heater 1820, a first proportional valve 1880a, a second pump 1860b, the battery assembly 104, a coolant chiller 1814, and a check valve 1866. The battery subsystem 1834 further includes a first evaporator expansion valve assembly 1906a in fluid communication with a compressor 1908, a condenser 1858, a first solenoid valve 1909a, and a second solenoid valve 1909b. The first evaporator expansion valve assembly 1906a is configured to cool the coolant chiller 1814. In some embodiments, the first evaporator expansion valve assembly 1906a is coupled (e.g., mounted) to the coolant chiller 1814.

The HVAC subsystem 1830 includes a heat exchanger 1904, a second fan 1856b, and a second evaporator expansion valve assembly 1906b, which are disposed within the cab 110 as represented schematically by the enclosure 202. The second fan 1856b can be positioned to direct ambient air across the second evaporator expansion valve assembly 1906b and the heat exchanger 1904. Also, the heat exchanger 1904 is in fluid communication with the first proportional valve 1880a and the first pump 1860a. Further, the second evaporator expansion valve assembly 1906b is in fluid communication with the compressor 1908, the condenser 1858, and the second solenoid valve 1909b.

The HVAC subsystem 1830 and the battery subsystem 1834 overlap to share the first pump 1860a, the heater 1820, the first proportional valve 1880a, the second solenoid valve 1909b, the condenser 1858, and the compressor 1908. Accordingly, the HVAC system 1812 is shared between the battery subsystem 1834 and the HVAC subsystem 1830 and includes the first and second evaporator expansion valve assemblies 1906a, 1906b, the first solenoid valve 1909a, the second solenoid valve 1909b, the condenser 1858, and the compressor 1908. Additionally, in some embodiments, a refrigerant (e.g., R32 difluoromethane, R134A, propane, etc.) circulates through the HVAC system 1812 as part of an air conditioning function and a battery cooling function. More specifically, the refrigerant removes heat from the coolant chiller 1814 and the cab 110 via the first and second evaporator expansion valve assemblies 1906a, 1906b, respectively. For example, the refrigerant absorbs heat from the coolant chiller 1814 and the environment within the cab 110 and evaporates from a liquid state into a gaseous state within the first and second evaporator expansion valve assemblies 1906a, 1906b. In contrast, the condenser 1858 releases heat from the refrigerant into the ambient atmosphere. For example, the refrigerant is compressed from a gaseous state into a liquid state by the compressor 1908, which feeds into the condenser 1858, generating heat that is released into the atmosphere.

In the battery subsystem 1834, the first pump 1860a is upstream of and delivers temperature conditioning fluid to the heater 1820. In turn, the heater 1820 is upstream of and delivers temperature conditioning fluid to the first proportional valve 1880a. The first proportional valve 1880a is upstream of and delivers temperature conditioning fluid to the second pump 1860b via a first outlet 1890a and to the heat exchanger 1904 via a second outlet 1890b. The second pump 1860b is upstream of and delivers temperature conditioning fluid to the battery assembly 104. In some forms, a pressure gauge 1912 can be fluidly placed between the battery assembly 104 and the second pump 1860b. Further, the battery assembly 104 is upstream of and delivers temperature conditioning fluid to the coolant chiller 1814. The coolant chiller 1814 is upstream of and delivers temperature conditioning fluid back to the first pump 1860a and/or the second pump 1860b. The check valve 1866 prevents backflow of the temperature conditioning fluid from the first pump 1860a and/or the first outlet 1890a toward the coolant chiller 1814. Thus, the first proportional valve 1880a variably delivers temperature conditioning fluid to the HVAC subsystem 1830 and the battery subsystem 1834.

In the HVAC subsystem 1830, the heat exchanger 1904 is downstream of and receives temperature conditioning fluid from the second outlet 1890b. Further, the heat exchanger 1904 is upstream of and delivers temperature conditioning fluid back to the first pump 1860a.

In the HVAC system 1812, the compressor 1908 is upstream of and delivers hot, compressed refrigerant to the condenser 1858, where the refrigerant remains compressed and cools, releasing heat into the ambient atmosphere. Further, the condenser 1858 is upstream of and delivers cooled, compressed refrigerant to the first and second solenoid valves 1909a, 1909b. The first solenoid valve 1909a is upstream of and delivers cooled, compressed refrigerant to the first evaporator expansion valve assembly 1906a, where the refrigerant is permitted to expand and evaporate to a gaseous state. Thus, the refrigerant becomes chilled in the first evaporator expansion valve assembly 1906a to remove heat from the temperature conditioning fluid via the coolant chiller 1814. In turn, the first evaporator expansion valve assembly 1906a is upstream of and delivers warm, gaseous refrigerant to the compressor 1908. The second solenoid valve 1909b is upstream of and delivers cooled, compressed refrigerant to the second evaporator expansion valve assembly 1906b. Thus, the refrigerant becomes chilled in the second evaporator expansion valve assembly 1906b to remove heat from the air in the cab 110. In some instances, the second fan 1856b moves the air in the cab 110 across the second evaporator expansion valve assembly 1906b. In turn, the second evaporator expansion valve assembly 1906b is upstream of and delivers warm, gaseous refrigerant to the compressor 1908.

In the HVAC subsystem 1830, when the heat exchanger 1904 is receiving heated temperature conditioning fluid, heat is transferred from the heat exchanger 1904 into the cab 110, in particular by the second fan 1856b, which warms the cab 110. Conversely, in some embodiments, when the heat exchanger 1904 is receiving ambient or cooled temperature conditioning fluid, heat is transferred from the cab 110 into the heat exchanger 1904, which cools the cab 110. Additionally, when the second evaporator expansion valve assembly 1906b is active, heat is transferred from the cab 110 into the second evaporator expansion valve assembly 1906b, which cools the cab 110.

Temperature conditioning fluid selectively moves through the battery subsystem 1834 and/or the HVAC subsystem 1830 based on activation of the first pump 1860a, activation of the second pump 1860b, and the configuration of the first proportional valve 1880a. Temperatures of temperature conditioning fluid can be measured via temperature sensors 1842u-1842ab associated with one or more of the first pump 1860a, the heater 1820, the first proportional valve 1880a, the second pump 1860b, the battery assembly 104, the coolant chiller 1814, the heat exchanger 1904, and the cab 110, respectively. In some forms, the temperature sensors 1842u-1842ab are installed inside of, outside of, or near said components. Further, the first pump 1860a, the second pump 1860b, and the first proportional valve 1880a adjustably and/or proportionally deliver temperature conditioning fluid based on heating and cooling demands and/or temperature data from the temperature sensors 1842u-1842ab.

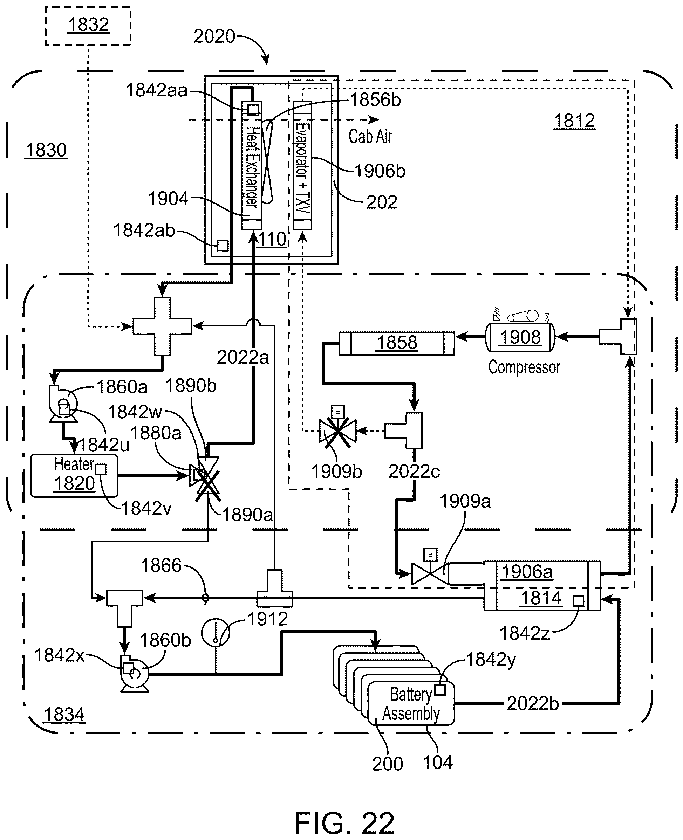

With reference to FIG. 22, in a first configuration 2020, the cab 110 demands heating while the battery assembly 104 demands cooling. More specifically, in the first configuration 2020, the first pump 1860a is activated and the first proportional valve 1880a is adjusted to close the first outlet 1890a and fully open the second outlet 1890b. Thus, the first proportional valve 1880a sends the full flow of heated temperature conditioning fluid from the heater 1820 to the heat exchanger 1904, which heats the cab 110. From the heat exchanger 1904, the temperature conditioning fluid recirculates back to the first pump 1860a and the heater 1820 in a first loop 2022a.

Further, in the first configuration 2020, to cool the battery assembly 104, the second pump 1860b is activated to circulate temperature conditioning fluid through the battery assembly 104 and the coolant chiller 1814 in a second loop 2022b. In some instances, to further cool the battery assembly 104, the compressor 1908 is activated and the second solenoid valve 1909b is closed to circulate refrigerant through the condenser 1858 and the first evaporator expansion valve assembly 1906a in a third loop 2022c.

The first and second loops 2022a, 2022b are independent of one another, which permits the first loop 2022a to remain warm (e.g., approximately 80°C) while the second loop 2022b is relatively cool (e.g., 25-35°C). Additionally, the third loop 2022c is independent of the first loop 2022a and the second loop 2022b.

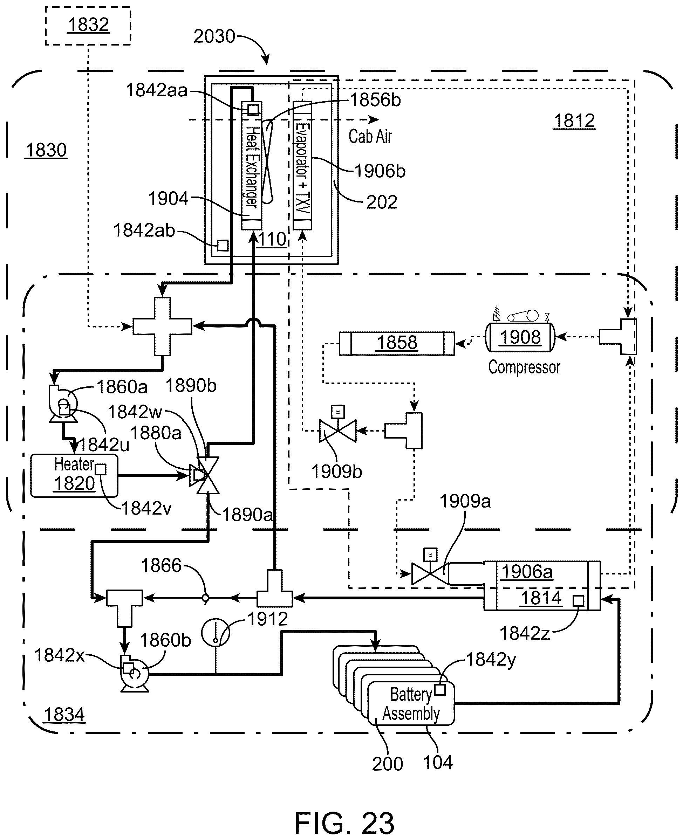

With reference to FIG. 23, in a second configuration 2030, both the cab 110 and the battery assembly 104 demand heating. More specifically, in the second configuration 2030, the first pump 1860a is activated and the first proportional valve 1880a is adjusted to deliver heated temperature conditioning fluid from the heater 1820 to the heat exchanger 1904 and to the second pump 1860b. The second pump 1860b is also activated to circulate temperature conditioning fluid through the battery assembly 104 and the coolant chiller 1814. From the heat exchanger 1904 and the coolant chiller 1814, temperature conditioning fluid returns to the first pump 1860a. In some instances, the first proportional valve 1880a sends more temperature conditioning fluid to the heat exchanger 1904 than to the second pump 1860b and vice versa due to differences in the heating demands of the cab 110 and the battery assembly 104. In some instances, the first proportional valve 1880a sends temperature conditioning fluid to the heat exchanger 1904 and the second pump 1860b equally. It is understood that in the second configuration 2030, the HVAC system 1812 is deactivated.

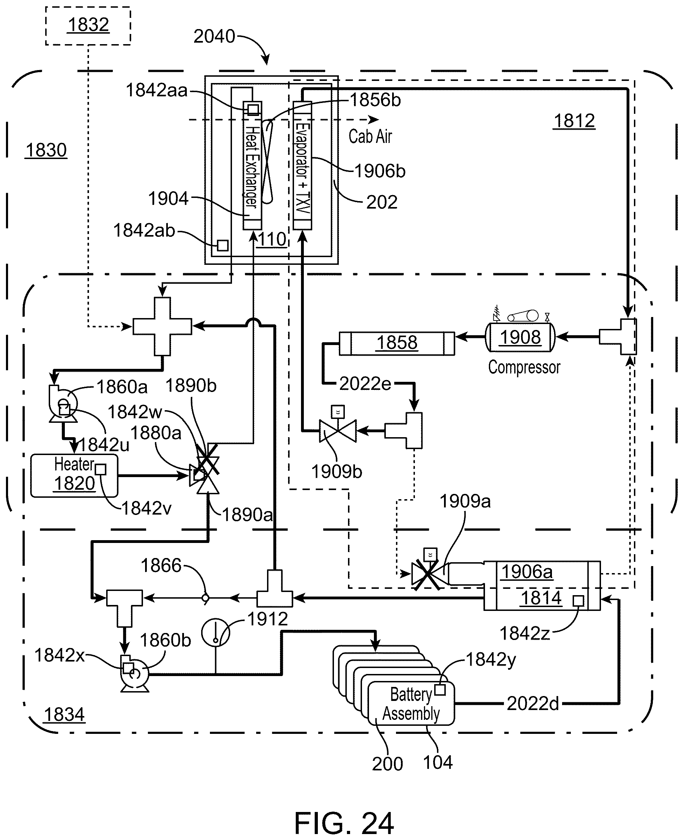

With reference to FIG. 24, in a third configuration 2040, the battery assembly 104 demands heating and the cab 110 demands cooling. More specifically, in the third configuration 2040, the first pump 1860a is activated and the first proportional valve 1880a is adjusted to close the second outlet 1890b and fully open the first outlet 1890a. Thus, the first proportional valve 1880a sends the full flow of heated temperature conditioning fluid from the heater 1820 to the second pump 1860b. The second pump 1860b is activated to circulate the heated temperature conditioning fluid through the battery assembly 104 and the coolant chiller 1814, which warms the battery assembly 104. From the coolant chiller 1814, the temperature conditioning fluid returns to the first pump 1860a in a fourth loop 2022d.

Further, to cool the cab 110, the compressor 1908 is activated and the first solenoid valve 1909a is closed such that refrigerant is circulated through the condenser 1858 and the second evaporator expansion valve assembly 1906b in a fifth loop 2022e and not circulated through the first evaporator expansion valve assembly 1906a.

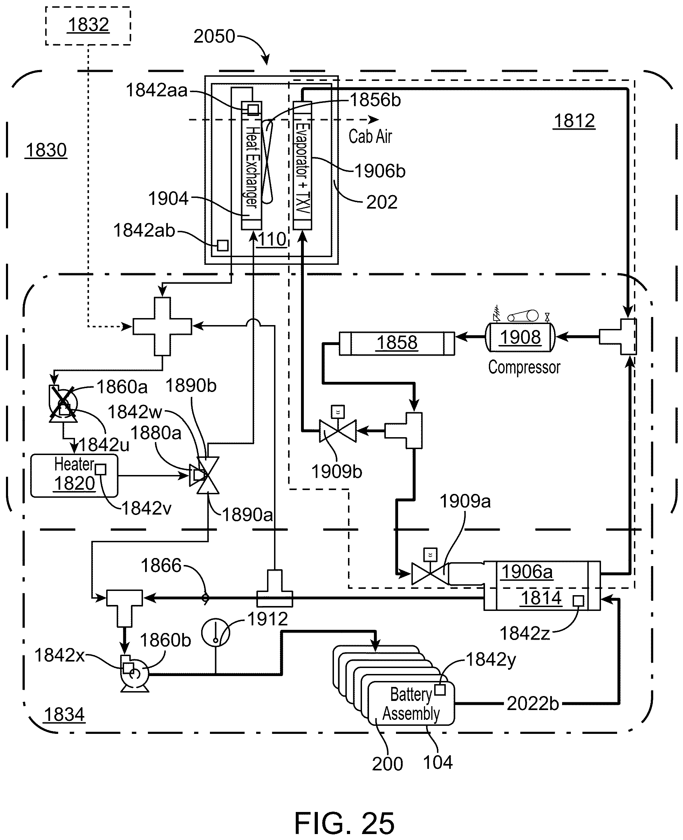

With reference to FIG. 25, in a fourth configuration 2050, both the battery assembly 104 and the cab 110 demand cooling. More specifically, in the fourth configuration 2050, the first pump 1860a is deactivated and the heater 1820 is turned off. Further, in the fourth configuration 2050, the second pump 1860b is activated to circulate temperature conditioning fluid through the battery assembly 104 and the coolant chiller 1814 in the second loop 2022b. Additionally, in the fourth configuration 2050, the compressor 1908 is activated and the first and second solenoid valves 1909a, 1909b are open to circulate refrigerant through the condenser 1858 and the first and second evaporator expansion valve assemblies 1906a, 1906b.

In some forms, when the cell temperature of the plurality of batteries 200 exceeds 25°C, the process for cooling the battery assembly 104 is automatically initiated (see FIG. 25). Further, once the cell temperature of the plurality of batteries 200 drops below 20°C, the process for cooling the battery assembly 104 is stopped. On the other hand, if the cell temperature of the plurality of batteries 200 drops below 0°C, the process for heating the battery assembly 104 is automatically initiated (see FIG. 25). Further, once the cell temperature of the plurality of batteries 200 rises above 10°C, the process for heating the battery assembly 104 is stopped (see FIG. 23).

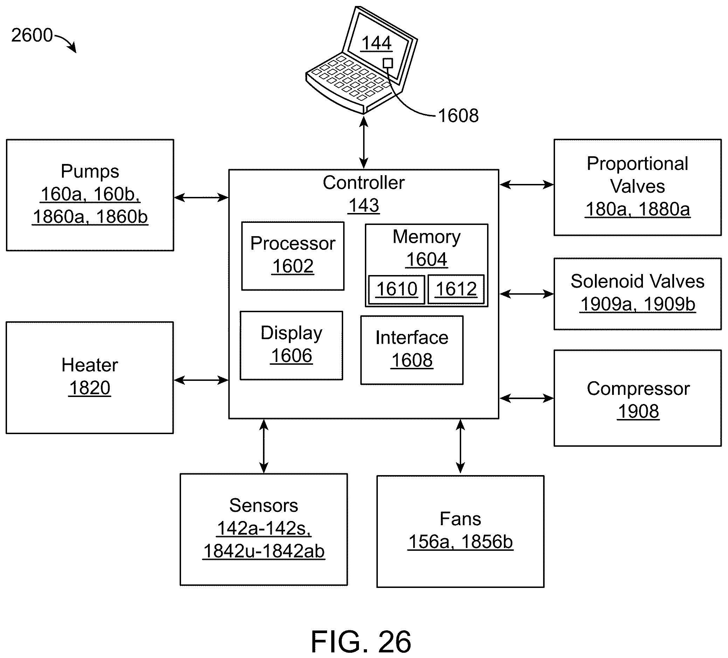

FIG. 26 illustrates various interconnected electronic components 2600 of the electric work machine with which the temperature management system 1800 is integrated. The electronic components 2600 include the controller 143 in communication (e.g., electrical, wireless, data, etc., communication) with the temperature sensors 142a-142s, 1842u-1842ab, the computing device 144, the fans 156a, 1856b, the pumps 160a, 160b, 1860a, 1860b, the proportional valves 180a, 1880a, the heater 1820, the compressor 1908, and the first and second solenoid valves 1909a, 1909b. Further, the computing device 144 is removably connectable to the controller 143 and may be used to program and/or retrieve data from the controller 143. Here, responsive to temperature data from the temperature sensors 142a-142s, 1842u-1842ab, various configurations, settings, and activations of the fans 156a, 1856b, the pumps 160a, 160b, 1860a, 1860b, the proportional valves 180a, 1880a, the heater 1820, the compressor 1908, and/or the first and second solenoid valves 1909a, 1909b may be programmed into the controller 143 via the interface 1608 and/or the computing device 144, or preprogrammed into the controller 143. Further, temperature measurements, rotational speeds (fans and pumps), flow apportionments, and activation statuses may be variously retrieved from the temperature sensors 142a-142s, 1842u-1842ab, the fans 156a, 1856b, the pumps 160a, 160b, 1860a, 1860b, proportional valves 180a, 1880a, the heater 1820, the compressor 1908, and/or the first and second solenoid valves 1909a, 1909b. Further, the activation status of the work group system 102, the traction system 106, the battery charger 108, and the HVAC system 1812 can be used to apportion temperature conditioning fluid or demand more temperature conditioning fluid based on which vehicle systems are in use.

More specifically, in operation, the processor 1602 may retrieve temperature conditioning apportionment data 1610 and/or operating temperature thresholds 1612 from the memory 1604 to supply a particular subsystem and/or component with a greater proportion of temperature conditioning fluid until the temperature conditioning demand of that particular subsystem and/or component is met. For example, when the battery assembly 104 and the operator in the cab 110 both demand temperature conditioning, the processor 1602 may access the memory 1604 and use the temperature conditioning apportionment data 1610 to activate the pumps 160a, 160b, 1860a, 1860b and actuate the proportional valve 1880a and/or the first and second solenoid valves 1909a, 1909b to satisfy the temperature conditioning demand of the battery assembly 104 and the cab 110.

Additionally, the processor 1602 may use the operating temperature thresholds 1612 to determine whether the temperature of a component is outside a predetermined operating temperature range by comparing data from the temperature sensors 142a-142s, 1842u-1842ab to specific temperature thresholds for the components of the temperature conditioning system 1800. Further, the processor 1602 may use the temperature conditioning apportionment data 1610 and/or the operating temperature thresholds 1612 to control the pumps 160a, 160b, 1860a, 1860b, the heater 1820, the fans 156a, 1856b, the compressor 1908, the proportional valves 180a, 1880a, and/or the first and second solenoid valves 1909a, 1909b to preferentially supply temperature conditioning fluid to bring the component temperatures within the predetermined operating temperature range. It should be understood that the proportional valve 1880a can be provided in the form of any three-way valve configuration, even if not a proportional valve.

Referring back to FIG. 17, the method 1700 is also executable by the controller 143 (see FIG. 19) to manage electric work machine component temperatures using the temperature management system 1800.

For example, when executing the method 1700 with the temperature management system 1800, at step 1702, the controller 143 monitors component temperatures. More specifically, the controller 143 collects temperature measurements of the subsystems (the HVAC subsystem 1830, the cooling subsystem 1832, the battery subsystem 1834, the traction subsystem 1836, and the work group and charger subsystem 1838) via the temperature sensors 142a-142s, 1842u-1842aa and determines whether component temperatures within the subsystems 1830, 1832, 1834, 1836, 1838 are within the designated operating temperature thresholds 1612. In some forms, the controller 143 also considers the activation status of the work group system 102, the battery assembly 104, the traction system 106, the battery charger 108, and the HVAC system 1812 at step 1702 so that the circulation of temperature conditioning fluid can be prioritized to active components (battery charger active, etc.), and in some embodiments, based on the degree to which a component is active (speed of motors 164a, 164b, 164c, etc.). In some forms, temperature conditioning fluid will not be circulated to inactive components, regardless of the sensed temperature of the component. Accordingly, one or both of the activation status and the data from the temperature sensors 142a-142s, 1842u-1842aa can comprise temperature conditioning demand data. The method proceeds to step 1704.

At step 1704, the controller 143 monitors a cab temperature conditioning demand. More specifically, the controller collects temperature measurements of the cab 110 via the temperature sensor 1842ab and determines whether the cab temperature meets the temperature conditioning demands made by the operator using the interface 1608. The method proceeds to step 1706.

At step 1706, the controller 143 adjusts one or more of the pumps 160a, 160b, 1860a, 1860b, one or more of the proportional valves 180a, 1880a, and/or one or more of the first and second solenoid valves 1909a, 1909b to preferentially provide temperature conditioning fluid flow to and/or within the subsystems 1830, 1832, 1834, 1836, 1838. More specifically, the controller 143 dynamically and responsively controls the pumps 160a, 160b, 1860a, 1860b, proportional valves 180a, 1880a, and/or the first and second solenoid valves 1909a, 1909b based on temperature measurements from the temperature sensors 142a-142s, 1842u-1842ab and the temperature conditioning apportionment data 1610 to provide greater temperature conditioning capacity to the cooling subsystem 1832, the battery subsystem 1834, the traction subsystem 1836, and the work group and charger subsystem 1838 than to the HVAC subsystem 1830 until component temperatures within the subsystems 1832, 1834, 1836, 1838 fall within their respective operating temperature thresholds 1612. The method 1700 proceeds to step 1708.

At step 1708, the controller 143 determines whether the operator in the cab 110 demands additional cooling or if the battery assembly 104 requires cooling. If yes, the method 1700 proceeds to step 1710. If no, the method 1700 proceeds to step 1712.

At step 1710, the controller 143 activates the air conditioning function of the HVAC system 1812, e.g., the first and second evaporator expansion valve assemblies 1906a, 1906b, the compressor 1908, etc., and opens/closes the first and second solenoid valves 1909a, 1909b accordingly. More specifically, the controller 143 controls the compressor 1908 to circulate refrigerant through one or both of the first and second evaporator expansion valve assemblies 1906a, 1906b, and the condenser 1858.

At step 1712, the controller 143 maintains the temperature conditioning fluid flow. More specifically, the controller 143 instructs the pumps 160a, 160b, 1860a, 1860b and proportional valves 180a, 1880a to circulate temperature conditioning fluid throughout the subsystems (the HVAC subsystem 1830, the cooling subsystem 1832, the battery subsystem 1834, the traction subsystem 1836, and the work group and charger subsystem 1838). The method 1700 returns to step 1702.

In other embodiments, other configurations are possible. For example, those of skill in the art will recognize, according to the principles and concepts disclosed herein, that various combinations, sub-combinations, and substitutions of the components discussed above can provide improved temperature management systems.

The above description of the disclosed exemplary embodiments is provided to enable any person skilled in the art to make or use one or more aspects of the disclosure. Various modifications to these embodiments will be readily apparent to those skilled in the art, and the generic principles defined herein may be applied to other embodiments without departing from the spirit or scope of the disclosure. Thus, the disclosure is not intended to be limited to the embodiments shown herein but is to be accorded the widest scope consistent with the principles and novel features disclosed herein.

## Claims

1. An electric work vehicle comprising:
a cooling subsystem, the cooling subsystem including a radiator to cool temperature conditioning fluid and an expansion tank fluidly coupled to the radiator;
a heater configured to heat temperature conditioning fluid;
a battery subsystem including a battery assembly in fluid communication with the heater and the radiator;
a heating, ventilation, and air conditioning (HVAC) subsystem including a heat exchanger, the heat exchanger being disposed in a cab of the vehicle and in fluid communication with the heater;
a pump configured to circulate the temperature conditioning fluid through the heater, the battery assembly, the heat exchanger, and the radiator; and
a plurality of valves in fluid communication with the heater, the battery assembly, the heat exchanger, the radiator, and the pump, the plurality of valves being configurable to:
selectively permit circulation of the temperature conditioning fluid through the battery assembly and the heat exchanger to selectively heat and cool the battery assembly and the cab.

2. The electric work vehicle of claim 1, further comprising:
a traction subsystem including at least one first inverter, at least one first motor, and a traction pump configured to circulate the temperature conditioning fluid through the at least one first inverter and the at least one first motor; and
a work group and charger subsystem including at least one second inverter, at least one second motor, a direct current to direct current (DC/DC) converter, a battery charger, and a work group pump configured to circulate the temperature conditioning fluid through the at least one second inverter, the at least one second motor, the DC/DC converter, and the battery charger.

3. The electric work vehicle of claim 2, wherein the battery subsystem, the HVAC subsystem, the traction subsystem, and the work group and charger subsystem are in fluid communication with the radiator of the cooling subsystem.

4. The electric work vehicle of claim 2, wherein the expansion tank is a first expansion tank, and the battery subsystem and the HVAC subsystem are in fluid communication with the first expansion tank, and
wherein the traction subsystem and the work group and charger subsystem are in fluid communication with a second expansion tank.

5. The electric work vehicle of claim 1, wherein the HVAC subsystem further includes an evaporator, an expansion valve, and a compressor in fluid communication with a condenser, wherein the evaporator is disposed in the cab and configured to cool the cab.

6. The electric work vehicle of claim 1, wherein the HVAC subsystem further includes a first expansion valve and a first evaporator, and
the battery subsystem includes a second expansion valve and a second evaporator,
the first expansion valve, the first evaporator, the second expansion valve, and the second evaporator are in fluid communication with at least one compressor and at least one condenser, and
the first evaporator is configured to cool the cab and the second evaporator is configured to cool a coolant chiller that cools the temperature conditioning fluid.

7. The electric work vehicle of claim 1, wherein a first valve of the plurality of valves is configured to allow recirculation of temperature conditioning fluid through the heater via the pump when a temperature sensor of the battery assembly determines that the battery assembly is below a heating temperature threshold.

8. The electric work vehicle of claim 3, wherein a second valve of the plurality of valves is configured to direct temperature conditioning fluid to the radiator when a temperature sensor of the battery assembly determines that the battery assembly is above a cooling temperature threshold.

9. The electric work vehicle of claim 1, wherein one or more temperature sensors are respectively associated with the battery assembly and the cab, and
a controller actuates one or more of the plurality of valves based on temperature conditioning demand data received from the one or more temperature sensors.

10. The electric work vehicle of claim 9, wherein the controller prioritizes heating the battery assembly, via heated temperature conditioning fluid, over heating the cab, via heated temperature conditioning fluid, when the temperature conditioning demand data indicates that the battery assembly is below a battery temperature threshold and the cab is below a cab temperature threshold.

11. An electric work vehicle, comprising:
a cab;
a battery subsystem including a battery assembly, a first expansion valve, a first evaporator, and a coolant chiller configured to cool temperature conditioning fluid flowing to the battery assembly; and
an HVAC subsystem including a second expansion valve and a second evaporator;
the first expansion valve, the first evaporator, the second expansion valve, and the second evaporator are in fluid communication with at least one compressor and at least one condenser, and
the first evaporator is configured to cool the coolant chiller and the second evaporator is configured to cool the cab.

12. The electric work vehicle of claim 11, further comprising:
one or more temperature sensors respectively associated with the battery subsystem and the HVAC subsystem;
a first solenoid valve to selectively allow refrigerant to flow through the first evaporator; and
a second solenoid valve to selectively allow refrigerant to flow through the second evaporator; and
a controller in communication with the one or more temperature sensors and configured to actuate the first solenoid valve and the second solenoid valve,
wherein when component temperature data from the one or more temperature sensors indicates that both the battery assembly and the cab require cooling, the controller:
activates the at least one compressor,
opens the first solenoid valve, and
opens the second solenoid valve.

13. The electric work vehicle of claim 11, further comprising:
a heater configured to heat temperature conditioning fluid;
a pump configured to circulate the temperature conditioning fluid;
one or more temperature sensors respectively associated with the battery subsystem and the HVAC subsystem;
a first solenoid valve to selectively allow refrigerant to flow through the first evaporator; and
a second solenoid valve to selectively allow refrigerant to flow through the second evaporator; and
a controller in communication with the heater, the pump, and the one or more temperature sensors and configured to actuate the first solenoid valve and the second solenoid valve,
wherein when component temperature data from the one or more temperature sensors indicates that the battery assembly requires heating while the cab requires cooling, the controller:
activates the at least one compressor,
closes the first solenoid valve,
opens the second solenoid valve,
activates the pump, and
activates the heater.

14. The electric work vehicle of claim 11, further comprising:
a cooling subsystem for cooling temperature conditioning fluid, the cooling subsystem including a radiator and an expansion tank;
a traction subsystem including a first inverter and a first motor, the traction subsystem being in fluid communication with the cooling subsystem;
a work group and charger subsystem including a second inverter, a second motor, a battery charger, and a DC/DC converter, the work group and charger subsystem being in fluid communication with the cooling subsystem; and
one or more temperature sensors respectively associated with one or more of the cooling subsystem, the traction subsystem, and the work group and charger subsystem;
wherein temperature conditioning fluid is circulated to one or more of the traction subsystem and the work group and charger subsystem based on temperature conditioning demand data received from the one or more temperature sensors.

15. The electric work vehicle of claim 11, further comprising:
a first proportional valve configured to distribute temperature conditioning fluid to the battery assembly and the HVAC subsystem based on temperature conditioning demand data received from one or more temperature sensors associated with the battery subsystem and the HVAC subsystem.
